# EUROPÄISCHE PATENTSCHRIFT

(11) **EP 1 240 215 B1**
(45) Veröffentlichungstag und Bekanntmachung des Hinweises auf die Patenterteilung: **26.04.2006**
(21) Anmeldenummer: 00993408.4
(22) Anmeldetag: 18.10.2000
(51) Int. Cl.: C08F 10/02, C08F 2/22, C08F 4/70, C08F 4/80

(54) **VERFAHREN ZUR EMULSIONSPOLYMERISATION VON OLEFINEN**
METHOD FOR THE EMULSION POLYMERISATION OF OLEFINS
PROCEDE DE POLYMERISATION EN EMULSION D'OLEFINES

(30) Priorität: 17.12.1999 DE 19961340
(43) Veröffentlichungstag der Anmeldung: 18.09.2002
(73) Patentinhaber: BASF Aktiengesellschaft, 67056 Ludwigshafen (DE)
(72) Erfinder: KRISTEN, Marc, Oliver, 67117 Limburgerhof (DE); MANDERS, Lambertus, 67069 Ludwigshafen (DE); MECKING, Stefan, 79110 Freiburg (DE); BAUERS, Florian, M., 79104 Freiburg (DE); MUELHAUPT, Rolf, 79117 Freiburg (DE)
(86) Internationale Anmeldenummer: PCT/EP2000/010244
(87) Internationale Veröffentlichungsnummer: WO 2001/044325

(56) Entgegenhaltungen:
- WO-A-96/23010
- WO-A-97/17380
- WO-A-97/47661
- WO-A-97/48740
- DE-A- 19 654 168
- FR-A- 2 784 110

## Beschreibung

Die vorliegende Erfindung betrifft ein Verfahren zur Emulsionspolymerisation von einem oder mehreren Olefinen durch Umsetzung der Olefine mit einer Komplexverbindung der allgemeinen Formel I b oder einem Gemisch der Komplexverbindungen I a und I b, 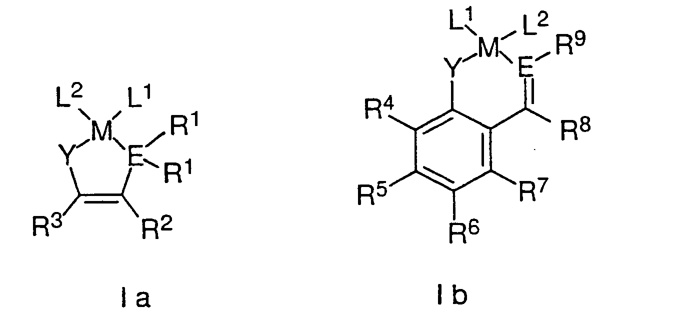 wobei die Reste wie folgt definiert sind:
- M: ein Übergangsmetall der Gruppen 7 bis 10 des Periodensystems der Elemente;
- L¹: Phosphane (R¹⁶)ₓPH₃₋ₓ oder Amine (R¹⁶)ₓNH₃₋ₓ mit gleichen oder verschiedenen Resten R¹⁶, Ether (R¹⁶)₂O, H₂O, Alkoholen (R¹⁶)OH, Pyridin, Pyridinderivate der Formel C₅H₅₋ₓ(R¹⁶)ₓN, CO, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
- L²: Halogenidionen, Amidionen RₕNH₂₋ₕ, wobei h eine ganze Zahl von 0 bis 2 bedeutet, und weiterhin C₁-C₆-Alkylanionen, Allylanionen, Benzylanionen oder Arylanionen, wobei L¹ und L² miteinander durch eine oder mehrere kovalente Bindungen verknüpft sein können,
- E: Stickstoff, Phosphor, Arsen oder Antimon,
- x: -SO₃-, -O-PO₃²-, NH (R¹⁵)₂⁺, N (R¹⁵)₃⁺ oder - (OCH₂CH₂)ₙOH.
- n: eine ganze Zahl von 0 bis 15,
- Y: Sauerstoff, Schwefel, N-R¹⁰ oder P-R¹⁰,
- R¹: Wasserstoff, C₁-C₁₂-Alkylgruppen, C₇-C₁₃-Aralkylresten und C₆-C₁₄-Arylgruppen, unsubstituiert oder substituiert mit einer hydrophilen Gruppe X,
- R² und R³: Wasserstoff,
hydrophile Gruppen X,
C₁-C₁₂-Alkyl, wobei die Alkylgruppen verzweigt oder unverzweigt sein können,
C₁-C₁₂-Alkyl, ein- oder mehrfach gleich oder verschieden substituiert durch C₁-C₁₂-Alkylgruppen, Halogene, hydrophile Gruppen X, C₁-C₁₂-Alkoxygruppen oder C₁-C₁₂-Thioethergruppen,
C₇-C₁₃-Aralkyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, hydrophile Gruppen X, C₁-C₁₂-Alkoxygruppen oder
C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, hydrophile Gruppen X, ein- oder mehrfach halogenierte
C₁-C₁₂-Alkylgruppen, C₁-C₁₂-Alkoxygruppen, Silyloxygruppen OSiR¹⁰R¹¹R¹², Aminogruppen NR¹³R¹⁴ oder C₁-C₁₂-Thioethergruppen,
C₁-C₁₂-Alkoxygruppen,
Silyloxygruppen OSiR¹⁰R¹¹R¹²,
Halogene
oder Aminogruppen NR¹³R¹⁴,
wobei die Reste R² und R³ miteinander einen gesättigten oder ungesättigten 5- bis 8-gliedrigen Ring bilden können,
und wobei
mindestens ein Rest R¹, R² oder R³ eine hydrophile Gruppe X trägt;
- R⁴ bis R⁷: Wasserstoff,
hydrophile Gruppen X,
C₁-C₁₂-Alkyl, wobei die Alkylgruppen verzweigt oder unverzweigt sein können,
C₁-C₁₂-Alkyl, ein- oder mehrfach gleich oder verschieden substituiert durch C₁-C₁₂-Alkylgruppen, Halogene, hydrophile Gruppen X, C₁-C₁₂-Alkoxygruppen oder C₁-C₁₂-Thioethergruppen,
C₇-C₁₃-Aralkyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, hydrophile Gruppen X, C₁-C₁₂-Alkoxygruppen oder
C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, hydrophile Gruppen X, ein- oder mehrfach halogenierte C₁-C₁₂-Alkylgruppen, C₁-C₁₂-Alkoxygruppen, Silyloxygruppen
OSiR¹⁰R¹¹R¹², Aminogruppen NR¹³R¹⁴ oder C₁-C₁₂-Thioethergruppen,
C₁-C₁₂-Alkoxygruppen,
Silyloxygruppen OSiR¹⁰R¹¹R¹²,
Halogene,
NO₂-Gruppen
oder Aminogruppen NR¹³R¹⁴,
wobei jeweils zwei benachbarte Reste R⁴ bis R⁷ miteinander einen gesättigten oder ungesättigten 5-8-gliedrigen Ring bilden können,
- R⁸ und R⁹: Wasserstoff, C₁-C₆-Alkylgruppen, C₇-C₁₃-Aralkylgruppen und C₆-C₁₄-Arylgruppen, unsubstituiert oder substituiert mit einer hydrophilen Gruppe X,
- R¹⁰ bis R¹⁵: Wasserstoff, C₁-C₂₀-Alkylgruppen, die ihrerseits mit O(C₁-C₆-Alkyl) oder N(C₁-C₆-Alkyl)₂-Gruppen substituiert sein können, C₃-C₁₂-Cycloalkylgruppen, C₇-C₁₃-Aralkylresten und C₆-C₁₄-Arylgruppen;
- R¹⁶: Wasserstoff, C₁-C₂₀-Alkylgruppen, die ihrerseits mit O(C₁-C₆-Alkyl) oder N(C₁-C₆-Alkyl)₂-Gruppen substituiert sein können,
C₃-C₁₂-Cycloalkylgruppen, C₇-C₁₃-Aralkylresten und
C₆-C₁₄-Arylgruppen, unsubstituiert oder substituiert mit einer hydrophilen Gruppe x,
in Wasser oder in einem Lösemittelgemisch, das mindestens 50 Vol.-% Wasser enthält, optional in Gegenwart eines Aktivators und eines Emulgators.

Die Verbindungen I a und I b werden in einem Verhältnis von 0 : 100 bis 40 : 10 mol-% eingesetzt. Für das erfindungsgemäße Verfahren wird optional ein Aktivator wie beispielsweise Olefinkomplexe des Rhodiums oder Nickels eingesetzt.

Wässrige Dispersionen von Polymeren werden in zahlreichen sehr unterschiedlichen Anwendungen kommerziell verwertet. Zu nennen sind beispielsweise Papieranwendungen (Streicherei und Oberflächenleimung), Rohstoffe für Anstrich und Lacke, Klebrohstoffe (u.a. Haftklebstoffe), Textil- und Lederapplikationen, in der Bauchemie, Formschäume (Matratzen, Teppichrückenbeschichtungen) sowie für medizinische und pharmazeutische Produkte, beispielsweise als Bindemittel für Präparate. Eine Zusammenfassung findet sich in D. Distler (Herausgeber) "Wäßrige Polymerdispersionen", Wiley-VCH Verlag, 1. Auflage, 1999.

Bisher war es schwierig, wässrige Dispersionen von Polyolefinen herzustellen. Es wäre aber wünschenswert, derartige wässrige Dispersionen von Polyolefinen bereitstellen zu können, weil die Monomere wie Ethylen oder Propylen unter wirtschaftlichen Aspekten sehr vorteilhaft sind.

Die gängigen Verfahren zur Herstellung derartiger wässriger Dispersionen aus den entsprechenden Olefinen bedienen sich entweder der radikalischen Hochdruckpolymerisation oder aber der Herstellung von Sekundärdispersionen. Diese Verfahren sind mit Nachteilen behaftet. Die radikalischen Polymerisationsverfahren erfordern extrem hohe Drücke, sie sind in technischem Maßstab auf Ethylen und Ethylencopolymerisate beschränkt, und die erforderlichen Apparaturen sind sehr teuer in Anschaffung und Wartung (F. Rodriguez, Principles of Polymer Systems, 2. Auflage, McGraw-Hill, Singapur **1983**, S. 384). Eine andere Möglichkeit besteht darin, zunächst Ethylen in einem beliebigen Verfahren zu polymerisieren und anschließend eine Sekundärdispersion herzustellen, wie in US 5,574,091 beschrieben. Diese Methode ist ein Mehrstufenverfahren und somit sehr aufwendig.

Es ist deshalb wünschenswert, 1-Olefine wie Ethylen oder Propylen unter den Bedingungen der Emulsionspolymerisation zu polymerisieren und die geforderte Dispersion in einem Schritt aus dem entsprechenden Monomer herzustellen. Außerdem haben Emulsionspolymerisationsverfahren ganz allgemein den Vorteil, dass sie Polymere mit hohen Molmassen liefern, wobei die Wärmeabfuhr verfahrensbedingt gut im Griff ist. Schließlich sind Reaktionen in wässrigen Systemen ganz allgemein deshalb interessant, weil Wasser ein billiges und umweltfreundliches Lösemittel ist.

Gerade aber für die Polymerisation von 1-Olefinen wie Ethylen oder Propylen ist noch kein befriedigendes Verfahren gefunden worden. Das Problem liegt im Allgemeinen im für die Polymerisation dieser Monomeren erforderlichen Katalysator.

Mit elektrophilen Übergangsmetallverbindungen wie TiCl₄ (Ziegler-Natta-Katalysator) oder Metallocenen lassen sich Olefine polymerisieren, wie beispielsweise von H.-H. Brintzinger et al. in *Angew. Chem.* **1995**, *107,* 1255, *Angew. Chem., Int. Ed. Engl.* **1995**, *34*, 1143 beschrieben wird. Jedoch sind sowohl TiCl₄ als auch Metallocene feuchtigkeitsempfindlich und eignen sich daher wenig zur Herstellung von Polyolefinen in der Emulsionspolymerisation. Auch die als Cokatalysatoren verwendeten Aluminiumalkyle sind feuchtigkeitsempfindlich, so dass Wasser als Katalysatorgift sorgfältig ausgeschlossen werden muss.

Es gibt nur wenig Berichte über Übergangsmetall-katalysierte Reaktionen von Ethylen in wässrigem Milieu. So berichten L. Wang et al. in *J. Am*. *Chem. Soc.* **1993,** *115,* 6999 über eine Rhodium-katalysierte Polymerisation. Die Aktivität ist mit rund einer Insertion/Stunde für technische Anwendungen jedoch viel zu gering.

Die Umsetzung von Ethylen mit Nickel-P,O-Chelatkomplexen erscheint wesentlich vielversprechender, wie sie in den US-Schriften US 3,635,937, US 3,637,636, US 3,661,803 und US 3,686,159 beschrieben wird. Über die polymeranalytischen Daten wird nichts berichtet. Auch ist die berichtete Aktivität für technische Anwendungen immer noch zu gering.

In EP-A 0 046 331 und EP-A 0 046 328 wird über die Umsetzung von Ethylen mit Ni-Chelat-Komplexen der allgemeinen Formel A berichtet 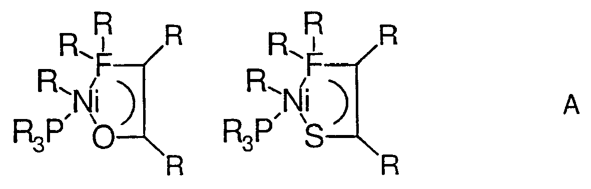 wobei unter R gleiche oder verschiedene organische Substituenten verstanden werden, von denen einer eine Sulfonylgruppe trägt, und F Phosphor, Arsen oder Stickstoff bedeutet. Unter den gewählten Reaktionsbedingungen in Lösemitteln wie Methanol oder Gemischen aus Methanol und einem Kohlenwasserstoff wurden nur Oligomere erhalten, die für die oben genannten Anwendungen ungeeignet sind. Der Vorteil der sulfonierten Derivate gegenüber nicht sulfonierten Verbindungen, wie sie von W. Keim et *al.* in *Angew. Chem.* **1978,** *90,* 493; *Angew. Chem., Int. Ed. Eng1.* **1978,** *6,* 466, beschrieben werden, lag in ihrer höheren Aktivität.

In US 4,698,403 (Spalte 7, Zeile 13-18) und in US 4,716,205 (Spalte 6, Zeile 59-64) wird gezeigt, dass ein Überschuss an Wasser gegenüber zweizähnigen Ni-Chelatkomplexen als Katalysatorgift wirkt, auch wenn sie eine SO₃-Gruppe tragen.

Aus den oben zitierten Dokumenten ist ersichtlich, dass zahlreiche Ni-Komplexe in der Gegenwart von Wasser nicht polymerisationsaktiv sind.

Andererseits ist aus WO 97/17380 bekannt, dass Palladium-Verbindungen der Formel B, 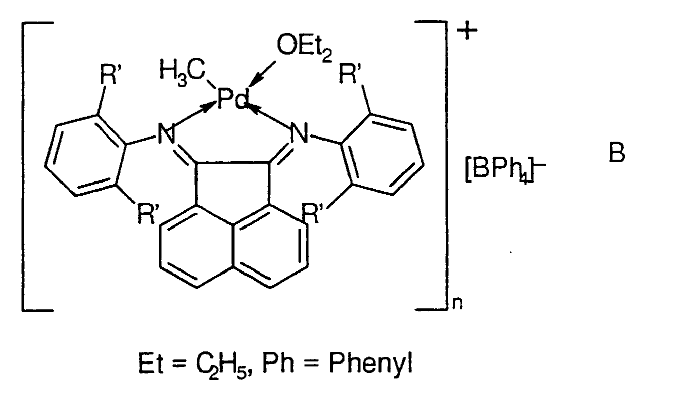 in denen R' beispielsweise für Isopropylgruppen steht, oder die analogen Nickelverbindungen höhere Olefine wie 1-Octen in wässriger Umgebung polymerisieren können. Optional kann ein Emulgator hinzugefügt werden, um die Polymerisation zu erleichtern. Allerdings wird darauf hingewiesen, dass die Temperatur von 40°C nicht überschritten werden sollte, weil andernfalls der Katalysator deaktiviert wird (S. 25, Zeile 5 ff). Höhere Reaktionstemperaturen sind aber im Allgemeinen wünschenswert, weil dadurch die Aktivität eines Katalysatorsystems erhöht werden kann.

Nachteilig an Katalysatorsystemen der allgemeinen Formel B ist weiterhin, dass mit Ethylen im Allgemeinen hochverzweigte Polymerisate gebildet werden (L.K. Johnson *J. Am. Chem. Soc.* **1995,** 117, 6414; C. Killian, *J. Am*. *Chem. Soc.* **1996**, 118, 11664), die bisher technisch weniger von Bedeutung sind, und mit höheren α-Olefinen (L.T. Nelson *Polymer Preprints* **1997**, 38, 133) sogenanntes "chain running" der aktiven Komplexe beobachtet werden muss. Das "chain running" führt zu einer großen Anzahl von 1,ω-Fehlinsertionen, und dadurch werden im Allgemeinen amorphe Polymerisate erzeugt, die sich nur wenig als Werkstoffe eignen.

Weiterhin ist bekannt, dass Komplexe der allgemeinen Formel C 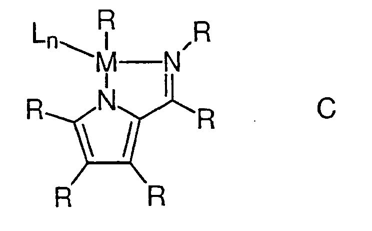 (WO 98/42665) mit M = Ni oder Pd und n Neutralliganden L in Anwesenheit geringer Mengen von Wasser polymerisationsaktiv sind, ohne das die katalytische Aktivität Einbußen erleidet (S. 16, Zeile 13). Diese wassermengen dürfen jedoch 100 Äquivalente, bezogen auf den Komplex, nicht überschreiten (Seite 16, Zeile 30-31). Unter diesen Bedingungen kann jedoch keine Emulsionspolymerisation durchgeführt werden.

Weiterhin ist bekannt, dass auch Komplexe der allgemeinen Formel D 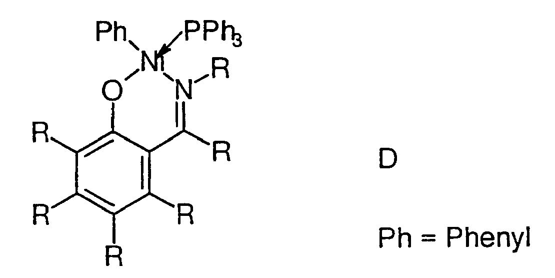 mit gleichen oder verschiedenen Resten R in der Lage sind, in Anwesenheit von geringen Mengen Wasser Ethylen zu polymerisieren (WO 98/42664, insbesondere Seite 17, Zeile 14 ff). Diese Wassermengen dürfen jedoch 100 Äquivalente, bezogen auf den Komplex, nicht überschreiten (Seite 17, Zeile 33-35). Unter diesen Bedingungen kann jedoch keine Emulsionspolymerisation durchgeführt werden.

Es bestand deshalb die Aufgabe, ein Verfahren bereitzustellen, welches
- Olefinen in Anwesenheit von großen Mengen Wasser zu Polyolefinen polymerisiert,
- dabei möglichst wenig verzweigte Werkstoffe mit hohen Molekulargewichten liefert, und
- erlaubt, diese Reaktion unter technisch vernünftigen Bedingungen durchzuführen.

Weiterhin wird beschrieben, mit dem erfindungsgemäßen Verfahren
- wässrige Polyolefin-Dispersionen herzustellen und
- diese Polyolefin-Dispersionen für Papieranwendungen (Streicherei und Oberflächenleimung), Rohstoffe für Anstrich und Lacke, Klebrohstoffe (u.a. Haftklebstoffe), Textil- und Lederapplikationen, in der Bauchemie, Formschäume (Matratzen, Teppichrückenbeschichtungen) sowie für medizinische und pharmazeutische Produkte zu verwenden.

Es wurde nun gefunden, dass sich Komplexsysteme, enthaltend mindestens eine Verbindung der allgemeinen Formel Ib oder ein Gemisch der Kompletverbindungen Ia und Ib hervorragend dazu eignen, eines oder mehrere Olefine in Emulsionspolymerisationsverfahren zu polymerisieren.

Als geeignete Olefine zur Polymerisation seien genannt: Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, *para*-Methylstyrol und *para*-Vinylpyridin, wobei Ethylen und Propylen bevorzugt sind. Besonders bevorzugt ist Ethylen.

Auch die Copolymerisation zweier Olefine gelingt mit dem erfindungsgemäßen Verfahren, wobei das Comonomer aus folgenden Gruppen gewählt werden kann:
- 1-Olefine wie Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, *para*-Methylstyrol und *para*-Vinylpyridin, wobei Propylen, 1-Buten, 1-Penten, 1-Hexen, 1-Hepten, 1-Octen, 1-Decen bevorzugt sind;
- interne Olefine wie Norbornen, Norbornadien oder cis- oder trans-2-Buten;
- polare Monomere wie Acrylsäure, Acrylsäure-C₁-C₈-alkylester, 2-Hydroxyethylacrylat, 3-Hydroxypropylacrylat, 4-Hydroxybutylacrylat, Methacrylsäure, Methacrylsäure-C₁-C₈-alkylester, C₁-C₆-Alkyl-Vinylether und Vinylacetat; bevorzugt sind Acrylsäure, Acrylsäuremethylester, Acrylsäureethylester, Acrylsäure-n-butylester, 2-Ethylhexylacrylat, 2-Hydroxyethylacrylat, Methylmethacrylat, Ethylmethacrylat, n-Butylmethacrylat, Ethylvinylether und Vinylacetat.

Dabei lässt sich das Verhältnis der beiden Monomere frei wählen. Bevorzugte Comonomere sind 1-Olefine und polare Monomere. Bevorzugt ist aber, dass das Comonomer in Anteilen von 0,1 bis 20 mol-%, bezogen auf das Hauptmonomer, eingesetzt wird.

In den Komplexverbindungen der allgemeinen Formel I a und I b sind die Reste wie folgt definiert:
- M: ist ein Übergangsmetall der Gruppen 7 bis 10 des Periodensystems der Elemente, vorzugsweise Mangan, Eisen, Kobalt, Nickel oder Palladium und besonders bevorzugt Nickel.
- L¹: wird gewählt aus Phosphanen der Formel (R¹⁶)ₓPH₃₋ₓ oder Aminen der Formel (R¹⁶)ₓNH₃₋ₓ, wobei x eine ganze Zahl zwischen 0 und 3 bedeutet. Aber auch Ether (R¹⁶)₂O wie Diethylether oder Tetrahydrofuran, H₂O, Alkohole (R¹⁶)OH wie Methanol oder Ethanol, Pyridin, Pyridinderivate der Formel C₅H₅₋ₓ(R¹⁶)ₓN, wie beispielsweise 2-Picolin, 3-Picolin, 4-Picolin, 2,3-Lutidin, 2,4-Lutidin,
2,5-Lutidin, 2,6-Lutidin oder 3,5-Lutidin, CO, C₁-C₁₂-Alkylnitrile oder C₆-C₁₄-Arylnitrile können gewählt werden, wie Acetonitril, Propionitril, Butyronitril oder Benzonitril. Weiterhin können einfach oder mehrfach ethylenisch ungesättigte Doppelbindungssysteme als Ligand L¹ dienen, wie Ethenyl, Propenyl, cis-2-Butenyl, trans-2-Butenyl, Cyclohexenyl oder Norbornenyl.
- L²: wird ausgewählt aus
- Halogenidionen wie Fluorid, Chlorid, Bromid, oder Iodid, bevorzugt sind Chlorid und Bromid,
- Amidionen (R¹⁶)ₕNH₂₋ₕ, wobei h eine ganze Zahl zwischen 0 und 3 bedeutet,
- C₁-C₆-Alkylanionen wie Me⁻, (C₂H₅)⁻, (C₃H₇)⁻, (n-C₄H₉)⁻, (tert.-C₄H₉)⁻ oder (C₆H₁₄)⁻;
- Allylanionen oder Methallylanionen,
- Benzylanionen oder
- Arylanionen wie (C₆H₅)⁻.

In einer besonderen Ausführungsform sind L¹ und L² miteinander durch eine oder mehrere kovalente Bindungen verknüpft. Beispiele für solche Liganden sind 1,5-Cyclooctadienyl-Liganden ("COD"), 1,6-Cyclodecenyl-Liganden oder 1,5,9-*all-trans-*Cyclododecatrienyl-Liganden.

In einer weiteren besonderen Ausführung ist L¹ Tetramethylethylendiamin, wobei nur ein Stickstoff mit dem Nickel koordiniert.
- E: bedeutet Stickstoff, Phosphor, Arsen oder Antimon, wobei Stickstoff und Phosphor bevorzugt sind.
- X: ausgewählt wird aus -SO₃⁻, -O-PO₃²⁻, NH(R¹⁵)₂⁺, N(R¹⁵)₃⁺ oder -(OCH₂CH₂)ₙOH, wobei n eine ganze Zahl zwischen 1 und 15 bedeutet, bevorzugt von 2 bis 10 und besonders bevorzugt von 3 bis 8.
- Y: bedeutet Sauerstoff, Schwefel, N-R¹⁰ oder P-R¹⁰, wobei Sauerstoff und Schwefel bevorzugt sind;
- R¹: ausgewählt wird aus
- Wasserstoff,
- C₁-C₁₂-Alkylgruppen, unsubstituiert oder substituiert mit einer hydrophilen Gruppe X; Beispiele für unsubstituierte C₁-C₁₂-Alkylgruppen sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl. Beispiele für die mit einer hydrophilen Gruppe X substituierten C₁-C₁₂-Alkylgruppen sind CH₂-SO₃⁻, CH₂-CH₂-SO₃⁻, -(CH₂)₁₀-SO₃⁻, -(CH₂)₁₂-SO₃⁻, -(CH₂)₁₆-SO₃⁻, -(CH₂)₁₈-SO₃⁻, -CH₂-NMe₃⁺, -(CH2)₁₀-NMe₃⁺, -(CH₂)₁₂-NMe₃⁺, -(CH₂)₁₆-NMe₃⁺, -(CH₂)₁₈-NMe₃⁺, CH₂-O-CH₂-CH₂-OH, CH₂-O-(CH₂-CH₂)₂-OH, CH₂-O-(CH₂-CH₂)₃-OH, CH₂-O-(CH₂-CH₂)₄-OH, CH₂-O-(CH₂-CH₂)₅-OH, CH₂-O-(CH₂-CH₂)₆-OH, oder CH₂-O-(CH₂-CH₂)₈-OH;
- C₇-C₁₃-Aralkylresten, unsubstituiert oder substituiert mit einer hydrophilen Gruppe X, Beispiele für unsubstituierte Aralkylreste sind C₇- bis C₁₂-Phenylalkyl wie Benzyl, 1-Phenethyl, 2-Phenethyl, 1-Phenylpropyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl; bevorzugte Beispiele für die mit einer hydrophilen Gruppe X substituierten Aralkylreste sind meta-Benzylsulfonat, para-Benzylsulfonat, ortho-HO(CH₂CH₂)ₙ-O-Benzyl, meta-HO(CH₂CH₂)ₙ-O-Benzyl und para-HO(CH₂CH₂)ₙ-O-Benzyl, wobei n eine ganze Zahl zwischen 1 und 15 bedeutet, bevorzugt von 2 bis 10 und besonders bevorzugt von 3 bis 8.
- C₆-C₁₄-Arylgruppen, unsubstituiert oder substituiert mit einer hydrophilen Gruppe X. Beispiele für unsubstituierte C₆-C₁₄-Arylgruppen sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl. Beispiele für mit hydrophilen Gruppen X substituierte C₆-C₁₄-Arylgruppen sind meta-Benzosulfonat, ortho-Benzosulfonat, para-Benzosulfonat, α-(4-Naphthosulfonat), β-(4-Naphthosulfonat), ortho-HO(CH₂CH₂)ₙ-O-Phenyl, meta-HO(CH2CH₂)ₙ-O-Phenyl und para-HO(CH₂CH₂)ₙ-O-Phenyl, wobei n eine ganze Zahl zwischen 1 und 15 bedeutet, bevorzugt von 2 bis 10 und besonders bevorzugt von 3 bis 8.
- R² und R³: bedeuten:
- Wasserstoff,
- hydrophile Gruppen X,
- C₁-C₁₂-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- C₁-C₁₂-Alkylgruppen, die ihrerseits mit einer hydrophilen Gruppe X substituiert sind; beispielsweise CH₂-CH₂-SO₃⁻, -(CH₂)₁₀-SO₃⁻, -(CH₂)₁₂-SO₃⁻, -(CH₂)₁₆-SO₃⁻, -(CH₂)₁₈-SO₃⁻, -CH₂-NMe₃⁺, -(CH2)₁₀-NMe₃⁺, - (CH₂)₁₂-NMe₃⁺, -(CH₂)₁₆-NMe₃⁺, -(CH₂)₁₈-NMe₃⁺, CH₂-(O-CH₂-CH₂)₂-OH, -CH₂-(O-CH₂-CH₂)₃-OH, CH₂-O-(CH₂-CH₂)₄-OH, -O-(CH₂-CH₂)₅-OH, CH₂-O-(CH₂-CH₂)₆-OH oder CH₂-O-(CH₂-CH₂)₈-OH
- C₁-C₁₂-Alkyl, ein- oder mehrfach gleich oder verschieden substituiert durch Halogene, C₁-C₁₂-Alkoxygruppen oder C₁-C₁₂-Thioethergruppen, wobei diese Gruppen wie oben definiert sind;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl,
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl, 3-Thiomethylcyclohexyl und weitere Derivate;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, substituiert durch eine oder mehrere
- C₁-C₁₂-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Bu- tyl, sec.-Butyl, tert.-Butyl, n-Pentyl, iso-Pentyl, sec.-Pentyl, neo-Pentyl, 1,2-Dimethylpropyl, isoAmyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₁-C₁₂-Alkylgruppen, die ihrerseits mit einer hydrophilen Gruppe X substituiert sind; beispielsweise-CH₂-CH₂-SO₃⁻, -(CH₂)₁₀-SO₃⁻, -(CH₂)₁₂-SO₃⁻, -(CH₂)₁₆-SO₃⁻, -(CH₂)₁₈-SO₃⁻, -CH₂-NMe₃⁺, - (CH₂)₁₀-NMe₃⁺, -(CH₂)₁₂-NMe₃⁺, -(CH₂)₁₆, -NMe₃⁺, -(CH₂)₁₈-NMe₃⁺,-CH₂-(O-CH₂-CH₂)₂-OH, -CH₂-(O-CH₂-CH₂)₃-OH, -CH₂-O- (CH₂-CH₂)₄-OH, -O-(CH_{z}-CH_{z})₅-OH, -CH₂-O-(CH₂-CH₂)₆-OH oder -CH₂-O- (CH₂-CH₂)₈-OH;
- Halogene, wie Fluor, Chlor, Brom und Jod, wobei Chlor und Brom bevorzugt sind,
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- Silyloxygruppen OSiR¹⁰R¹¹R¹², wobei R¹⁰ bis R¹² unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tripara-xylylsilyloxygruppe; besonders bevorzugt sind die Trimethylsilyloxygruppe und die tert.-Butyldimethylsilyloxygruppe;
- oder Aminogruppen NR¹³R¹⁴, wobei R¹³ und R¹⁴ unabhängig voneinander aus Wasserstoff, C₁-C₆-Alkylgruppen, Benzylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Dipheny- laminogruppe. Beispiele für Aminogruppen mit gesättigten Ringen sind die N-Piperidylgruppe und die N-Pyrrolidinylgruppe; Beispiele für Aminogruppen mit ungesättigten Ringen sind die N-Pyrrylgruppe, die N-Indolylgruppe und die *N*-Carbazolylgruppe;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy,
- Silyloxygruppen OSiR¹⁰R¹¹R¹², wobei R¹⁰ bis R¹² unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tripara-xylylsilyloxygruppe; besonders bevorzugt sind die Trimethylsilyloxygruppe und die tert.-Butyldimethylsilyloxygruppe;
- Halogene, wie Fluor, Chlor, Brom und Jod, wobei Chlor und Brom bevorzugt sind,
- oder Aminogruppen NR¹³R¹⁴, wobei R¹³ und R¹⁴ unabhängig voneinander aus Wasserstoff, C₁-C₆-Alkylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
wobei die Reste R² und R³ zusammen mit den C-Atomen des Stammkörpers einen 5 bis 8-gliedrigen Ring bilden können. Beispielsweise können R² und R³ zusammen sein: -(CH₂)₃- (Trimethylen), -(CH₂)₄₋(Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-,
-O-CH-(C₆H₅)-O-, -O-CH₂-CH₂-O-, -O-CMe₂-O-, -NMe-CH₂-CH₂-NMe-, -NMe-CH₂-NMe- oder
-O-SiMe₂-O-.
und wobei mindestens ein Rest R² oder R³ eine hydrophile Gruppe X trägt.
- R⁴ bis R⁷: bedeuten:
- Wasserstoff,
- hydrophile Gruppen X,
- C₁-C₁₂-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, isoAmyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
- C₁-C₁₂-Alkyl, ein- oder mehrfach gleich oder verschieden substituiert durch Halogene, C₁-C₁₂-Alkoxygruppen oder C₁-C₁₂-Thioethergruppen; wobei diese Gruppen wie oben spezifiziert sind;
- C₁-C₁₂-Alkylgruppen, die ihrerseits mit einer hydrophilen Gruppe X substituiert sind; beispielsweise CH₂-CH₂-SO₃⁻, -(CH₂)₁₀-SO₃⁻, -(CH₂)₁₂-SO₃⁻,
   -(CH₂)₁₆-SO₃⁻,
   -(CH₂)₁₈-SO₃⁻, -CH₂-NMe₃⁺, -(CH₂)₁₀-NMe₃⁺,
   - (CH₂)₁₂-NMe₃⁺,
   - (CH₂)₁₆-NMe₃⁺, - (CH₂)₁₈-NMe₃⁺, -CH₂-(O-CH₂-CH₂)₂-OH,
   -CH₂-(O-CH₂-CH₂)₃-OH, -CH₂-O-(CH₂-CH₂)₄-OH,
   -O-(CH₂-CH₂)₅-OH, -CH₂-O-(CH₂-CH₂)₆-OH oder
   -CH₂-O-(CH₂-CH₂)₈-OH;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl,
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl, 3-Thiomethylcyclohexyl und weitere Derivate;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, substituiert durch eine oder mehrere
- C₁-C₁₂-Alkylgruppen, wie Methyl, Ethyl, n-Propyl, iso-Propyl, n-Butyl, iso-Butyl, sec-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, isoAmyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₁-C₁₂-Alkylgruppen, die ihrerseits mit einer hydrophilen Gruppe X substituiert sind; beispielsweise CH₂-CH₂-SO₃⁻, -(CH₂)₁₀)-SO₃⁻, -(CH₂)₁₂-SO₃⁻,
   -(CH₂)₁₆-SO₃⁻, -(CH₂)₁₈-SO₃⁻, -CH₂-NMe₃⁺,
   - (CH2)₁₀-NMe₃⁺,
   -(CH₂)₁₂-NMe₃⁺, -(CH₂)₁₆-NMe₃⁺, -(CH₂)₁₈-NMe₃⁺,
   -CH₂-(O-CH₂-CH₂)₂-OH,
   -CH₂-(O-CH₂-CH₂)₃-OH, -CH₂-O-(CH₂-CH₂)₄-OH,
   -O-(CH₂-CH₂)₅-OH,
   -CH₂-O-(CH₂-CH₂)₆-OH oder -CH₂-O-(CH₂-CH₂)₈-OH;
- Halogene, wie Fluor, Chlor, Brom und Jod, wobei Chlor und Brom bevorzugt sind,
- NO₂-Gruppen,
- hydrophile Gruppen X,
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- Silyloxygruppen OSiR¹⁰R¹¹R¹², wobei R¹⁰ bis R¹² unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tripara-xylylsilyloxygruppe; besonders bevorzugt sind die Trimethylsilyloxygruppe und die tert.-Butyldimethylsilyloxygruppe;
- oder Aminogruppen NR¹³R¹⁴, wobei R¹³ und R¹⁴ unabhängig voneinander aus Wasserstoff, C₁-C₆-Alkylgruppen, Benzylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die N-Piperidylgruppe und die N-Pyrrolidinylgruppe; Beispiele für Aminogruppen mit ungesättigten Ringen sind die N-Pyrrylgruppe, die NIndolylgruppe und die *N*-Carbazolylgruppe;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy,
- Silyloxygruppen OSiR¹⁰R¹¹R¹², wobei R¹⁰ bis R¹² unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tripara-xylylsilyloxygruppe; besonders bevorzugt sind die Trimethylsilyloxygruppe und die tert.-Butyldimethylsilyloxygruppe;
- Halogene, wie Fluor, Chlor, Brom und Jod, wobei Chlor und Brom bevorzugt sind,
- NO₂-Gruppen
- oder Aminogruppen NR¹³R¹⁴, wobei R¹³ und R¹⁴ unabhängig voneinander aus Wasserstoff, C₁-C₆-Alkylgruppen und C₆-C₁₄-Arylgruppen ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die N-Piperidylgruppe und die N-Pyrrolidinylgruppe; Beispiele für Aminogruppen mit ungesättigten Ringen sind die *N*-Pyrrylgruppe, die N-Indolylgruppe und die *N*-Carbazolylgruppe;
wobei jeweils zwei benachbarte Reste R⁴ bis R⁷ zusammen mit den C-Atomen des Stammaromaten einen 5- bis 8-gliedrigen Ring bilden können, der weitere Substituenten Z tragen kann. Beispielsweise können R⁴ und R⁵ zusammen sein: -(CH₂)₃- (Trimethylen), -(CH₂)₄₋(Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O-.
- R⁸ und R⁹: werden gewählt aus:
- C₁-C₁₂-Alkylgruppen, unsubstituiert oder substituiert mit einer hydrophilen Gruppe X; Beispiele für unsubstituierte C₁-C₁₂-Alkylgruppen sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl. Beispiele für die mit einer hydrophilen Gruppe X substituierten C₁-C₁₂-Alkylgruppen sind CH₂-SO₃⁻, CH₂-CH₂-SO₃⁻, -(CH₂)₁₀-SO₃⁻, -(CH₂)₁₂-SO₃⁻, -(CH₂)₁₆-SO₃⁻, -(CH₂)₁₈-SO₃⁻, -CH₂-NMe₃⁺, -(CH2)₁₀-NMe₃⁺, -(CH₂)₁₂-NMe₃⁺, -(CH₂)₁₆-NMe₃⁺, -(CH₂)₁₈-NMe₃⁺, -CH₂-O-CH₂-CH₂-OH, -CH₂-O-(CH₂-CH₂)₂-OH, CH₂-O-(CH₂-CH₂)₃-OH, -CH₂-O-(CH₂-CH₂)₄-OH, -CH₂-O-(CH₂-CH₂)₅-OH, -CH₂-O-(CH₂-CH₂)₆-OH, oder -CH₂-O-(CH₂-CH₂)₈-OH;
- C₇-C₁₃-Aralkylresten, unsubstituiert oder substituiert mit einer hydrophilen Gruppe X, Beispiele für unsubstituierte Aralkylreste sind C₇- bis C₁₂-Phenylalkyl wie Benzyl, 1-Phenethyl, 2-Phenethyl, 1-Phenylpropyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl; bevorzugte Beispiele für die mit einer hydrophilen Gruppe X substituierten Aralkylreste sind meta-Benzylsulfonat, para-Benzylsulfonat, ortho-HO(CH₂CH_{z})ₙ-O-Benzyl, meta-HO(CH₂CH₂)ₙ-O-Benzyl und para-HO(CH₂CH₂)ₙ-O-Benzyl, wobei n eine ganze Zahl zwischen 1 und 15 bedeutet, bevorzugt von 2 bis 10 und besonders bevorzugt von 3 bis 8.
- C₆-C₁₄-Arylgruppen, unsubstituiert oder substituiert mit einer hydrophilen Gruppe X. Beispiele für unsubstituierte C₆-C₁₄-Arylgruppen sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl. Beispiele für mit hydrophilen Gruppen X substituierte C₆-C₁₄-Arylgruppen sind meta-Benzosulfonat, ortho-Benzosulfonat, para-Benzosulfonat, α-(4-Naphthosulfonat), β-(4-Naphthosulfonat), ortho-HO(CH₂CH₂)ₙ-O-Phenyl, meta-HO(CH₂CH₂)ₙ-O-Phenyl und para-HO(CH₂CH₂)ₙ-O-Phenyl, wobei n eine ganze Zahl zwischen 1 und 15 bedeutet, bevorzugt von 2 bis 10 und besonders bevorzugt von 3 bis 8.

In einer besonderen Ausführungsform des Verfahrens werden Komplexe der allgemeinen Formel I b' verwendet.

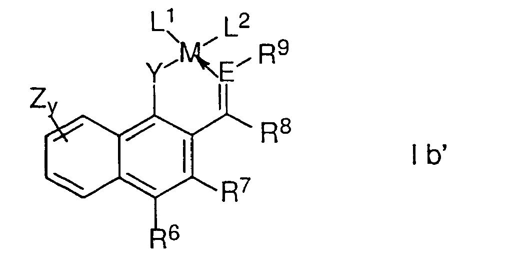

Dabei können die Substituenten Z gleich oder verschieden sein, und sie werden ausgewählt aus den folgenden Gruppen:
- Wasserstoff,
- Halogen wie Fluor, Chlor, Brom und Iod, bevorzugt Fluor oder Chlor;
- C₁-C₄-Alkyl wie Methyl, Ethyl, n-Propyl, iso-Propyl, n-Butyl, iso-Butyl, sec.-Butyl und tert.-Butyl;
- Hydrophile Gruppen X, wobei X wie oben definiert ist,
- N02,
- C₁-C₄-Alkoxy wie Methoxy, Ethoxy, n-Propoxy, n-Butoxy und tert.-Butoxy.

Dabei können ein oder mehrere Reste R⁴ bis R⁹ gleiche oder verschiedene hydrophile Gruppe X tragen. Bevorzugt sind dabei solche Ausführungsformen des Verfahrens, in denen mindestens ein oder mehrere Reste R⁴ bis R⁹ eine hydrophile Gruppe X trägt.
- R¹⁰ bis R¹⁵: werden unabhängig voneinander ausgewählt aus
- Wasserstoff,
- C₁-C₂₀-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Octyl, n-Nonyl, iso-Nonyl, n-Decyl, iso-Decyl, n-Undecyl, iso-Undecyl, n-Dodecyl, iso-Dodecyl, n-Tetradecyl, n-hexadecyl, n-octadecyl und n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl;
- mit O(C₁-C₆-Alkyl) oder N(C₁-C₆-Alkyl)₂-Resten substituierte C₁-C₂₀-Alkylgruppen, wie beispielsweise CH₂-CH₂-OCH₃ oder CH₂-CH₂-NMe₂;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkylresten, bevorzugt C₇- bis C₁₂-Phenylalkyl wie Benzyl, 1-Phenethyl, 2-Phenethyl, 1-Phenylpropyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
- C₆-C₁₄-Arylgruppen, wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
wobei jeweils zwei benachbarte Reste R¹⁰ bis R¹⁵ zusammen mit dem betreffenden Heteroatom einen 5 bis 8-gliedrigen Ring bilden können. Beispielsweise können R¹⁰ und R¹¹ zusammen sein: -(CH₂)₃₋(Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O-;
- R¹⁶: sind gleich oder verschieden und werden gewählt aus
- Wasserstoff,
- C₁-C₂₀-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Octyl, n-Nonyl, iso-Nonyl, n-Decyl, iso-Decyl, n-Undecyl, iso-Undecyl, n-Dodecyl, iso-Dodecyl, n-Tetradecyl, n-hexadecyl, n-octadecyl und n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl;
- mit O(C₁-C₆-Alkyl) oder N(C₁-C₆-Alkyl)₂-Resten substituierte C₁-C₂₀-Alkylgruppen, wie beispielsweise CH₂-CH₂-OCH₃ oder CH₂-CH₂-NMe₂;
- C₃-C₁₂-Cycloalkyl wie Cyclopropyl, Cyclobutyl, Cyclopentyl, Cyclohexyl, Cycloheptyl, Cyclooctyl, Cyciononyl, Cyclodecyl, Cycloundecyl und Cyclododecyl; bevorzugt sind Cyclopentyl, Cyclohexyl und Cycloheptyl;
- C₇-C₁₃-Aralkylresten, bevorzugt C₇- bis C₁₂-Phenylalkyl wie Benzyl, 1-Phenethyl, 2-Phenethyl, 1-Phenylpropyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
- C₆-C₁₄-Arylgruppen, wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; unsubstituiert oder substituiert mit einer hydrophilen Gruppe X.

Für Verbindungen der allgemeinen Formel I a oder I b mit ionischen hydrophilen Gruppen sind Gegenionen zum Ausgleich der elektrischen Ladung erforderlich. Zum elektrostatischen Ausgleich negativer Ladungen wie -SO₃⁻ oder -O-PO₃²⁻ haben sich die Kationen der Alkalimetalle wie Li⁺, Na⁺, K⁺, Rb⁺ und Cs⁺ bewährt, wobei Na⁺ und K⁺ wegen ihres niedrigeren Preises bevorzugt sind. Geeignet sind weiterhin Ammoniumsalze mit Kationen der allgemeinen Formel NR¹⁵_{z}H_{4-z}, wobei R¹⁵ wie oben beschrieben definiert ist und z eine ganze Zahl von 0 bis 4 ist. Besonders bevorzugte Ammoniumionen sind [NH₄]⁺, [NEt₂H₂]⁺, [NMe₄]⁺, [HN(n-C₄Hg)₃]⁺, [N(n-C₄H₉)₄]⁺, [n-C₁₆H₃₃NMe₃]⁺ und [C₆H₅-NHMe₂]⁺.

Zum elektrostatischen Ausgleich positiver Ladungen wie NH(R¹⁵)₂⁺ oder N(R¹⁵)₃⁺ hat sich eine Vielzahl von Anionen bewährt. Beispielhaft seien genannt: Halogenide wie Fluorid, Chlorid, Bromid oder Iodid; außerdem Hydrogensulfat, Triflat CF₃SO₃⁻, Acetat, BF₄-, [B(C₆H₅)₄]⁻, [B(C₆F₅)₄]⁻ oder PF₆⁻ oder SbF₆⁻, wobei Chlorid und Hydrogensulfat bevorzugt sind.

Es ist auch möglich, dass der Komplex gemäß Formel I a oder I b zwei verschiedene hydrophile Gruppen trägt, und zwar eine anionische Gruppe, ausgewählt aus -SO₃⁻ oder -O-PO₃²⁻, und eine kationische Gruppe, ausgewählt aus NH(R¹⁵)₂⁺ oder N(R¹⁵)₃⁺, so dass der zwitterionische Komplex elektrisch neutral ist.

Ausgewählte, ganz besonders bevorzugte Verbindungen der Formel Ia sind:
Na⁺ [Ni(Ph)PPh₃(κ²*P*, *O*Ph₂*P*C(SO₃⁻)=C(-*O*) (p-MeC₆H₄)] (Formel I a.1, s. Arbeitsbeispiel))
[n-C₁₆H₃₃NMe₃]⁺ [Ni (Ph) PPh₃ (κ²P, OPh₂PC (SO₃⁻) =C (-O) (P-MeC₆H₄)] (Formel I a.2, s. Arbeitsbeispiel)
Na⁺ [Ni(Ph)PPh₃(κ²*P*,*O*(*o*-MeC₆H₄)₂*PC*(SO₃⁻)=C(-*O*) (p-MeC₆H₄)]
[n-C₁₆H₃₃NMe₃]⁺ [Ni (Ph) PPh₃ (κ²*P*, *O*Ph₂*P*C (SO₃⁻) =C (-*O*) (p-MeC₆H₄)]
Na⁺ [Ni (Ph)PPh₃ (κ²*P*, *O*Ph₂ *P*C (SO₃⁻) =C(-*O*) (p-MeC₆H₄)]
mit Me = Methyl und Ph = Phenyl,
sowie die unten abgebildeten Verbindungen der Formeln Ia.5 bis Ia.10:

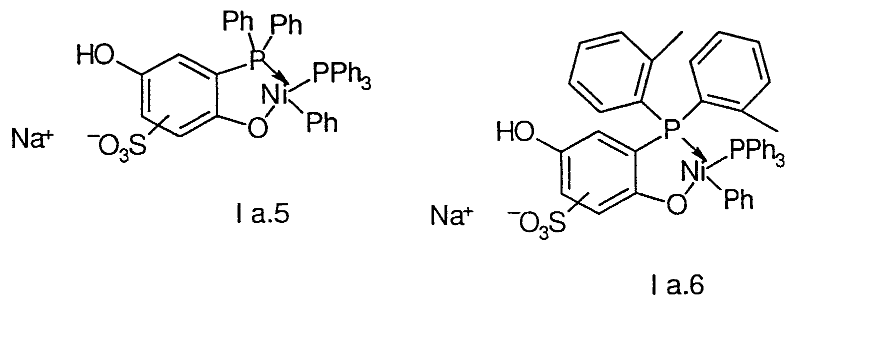

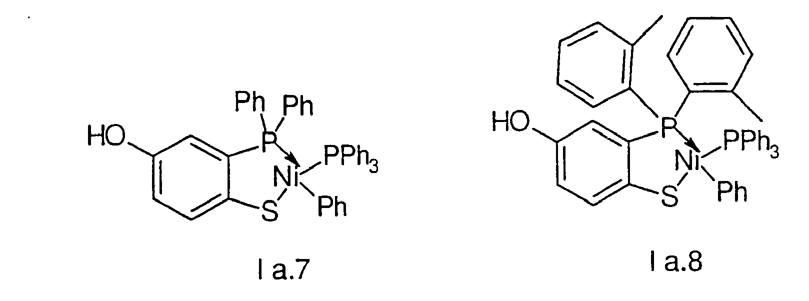

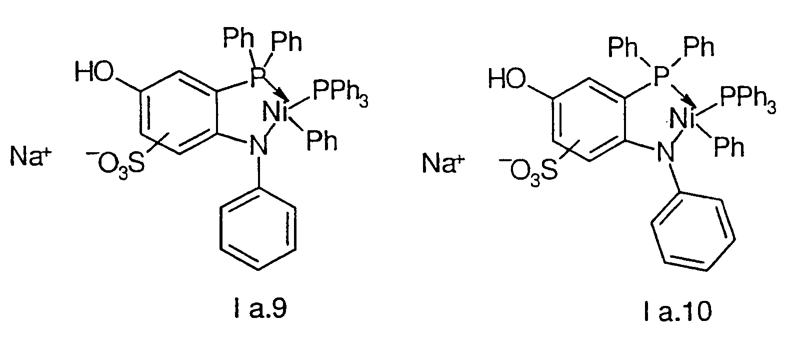

Ausgewählte, ganz besonders bevorzugte Verbindungen der Formel I b sind:
[O-3,5-I₂C₆H₂-*o*-C(H)-N=C2,6(*i*-C₃H₇)₂C₆H₃] Ni (C₆H₅) (PPh₃) (Formel I b.1, s. Arbeitsbeispiel)
[O-3,5-I₂C₆H₂-*o*-CMe-N=C2,6(*i*-C₃H₇)₂C₆H₃] Ni (C₆H₅) (PPh₃)
[O-3- (9-Anthracenyl) C₆H₃-*o*-C (H) -N=C2, 6(*i*-C₃H₇)₂C₆H₃]Ni(C₆H₅) (PPh₃)
[O-3- (9-Anthracenyl) -5-NO₂-C₆H₂-*o*-C (H) -N=C2, 6 (*i*-C₃H₇)₂C₆H₃] Ni (C₆H₅) (PPh₃)
Na⁺ [O-3-(9-Anthracenyl)-5-(SO₃-)-C₆H₂-*o*-C(H)-N=C2,6(*i*-C₃H₇)₂C₆H₃] Ni (C₆H₅) (PPh₃)
[O-3-(9-Anthracenyl)-5-I-C₆H₂-*o*-C(H)-N=C2,6 (*i*-C₃H₇)₂C₆H₃] Ni (C₆H₅) (PPh₃)
sowie die unten abgebildeten Verbindungen der Formeln Ib'.1 bis Ib'.10.

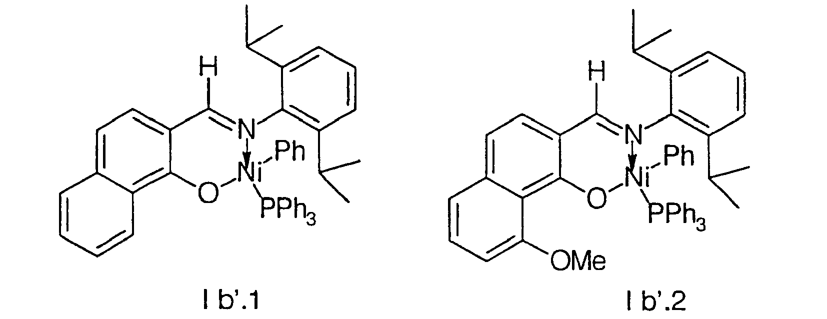

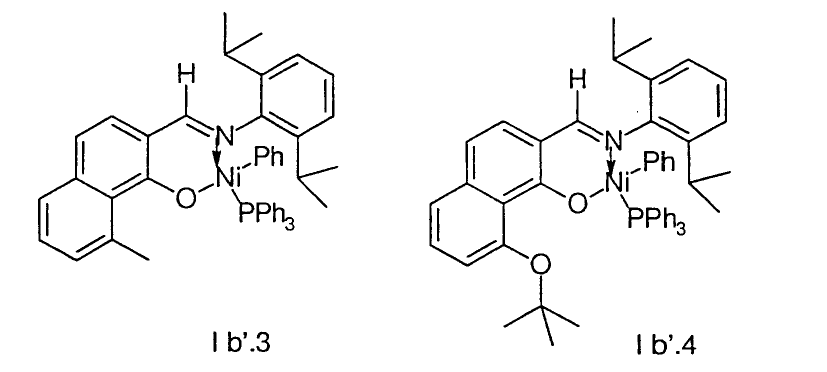

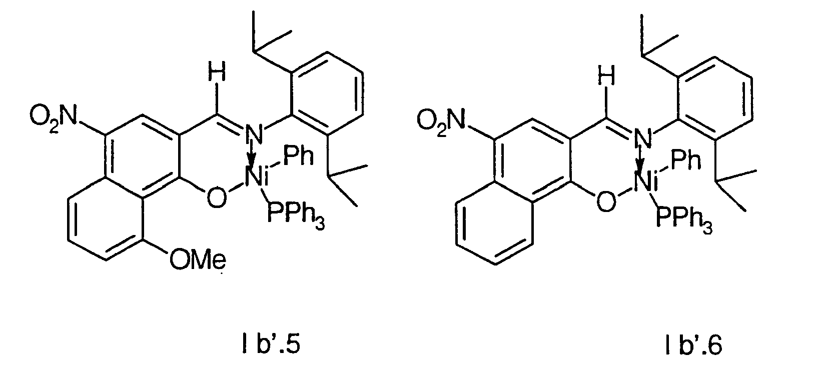

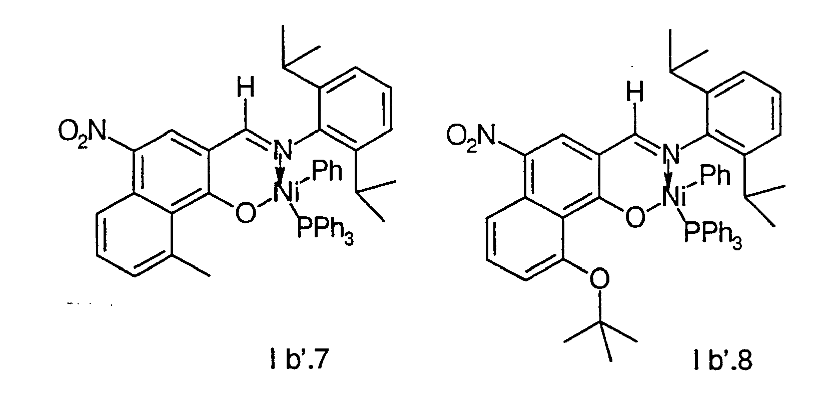

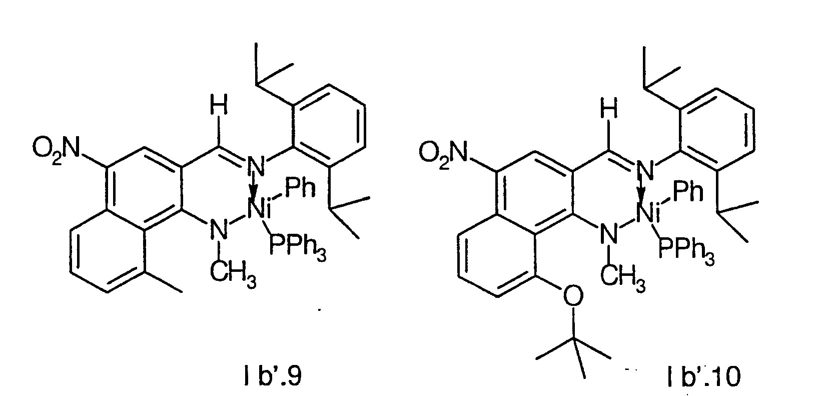

Die Synthese der Komplexe der allgemeinen Formel I a und I b ist an sich bekannt. Synthesevorschriften für Komplexe der Formel I a finden sich in EP-A 0 046 331, EP-A 0 046 328 und EP-A 0 052 929. Vorschriften für die Synthese von Komplexen der Formel I b finden sich in den Anmeldungen WO 98/30609 und WO 98/42664 und in der Publikation von C. Wang et al., *Organometallics* **1998**, *17*, 3149. Die Sulfonierungen wurden stets nach der von N. A. Nesmeyanov et al. in *Dokl. Akad. Nauk SSSR* **1963**, *151*, 856 beschriebenen Rezeptur durchgeführt. Bei der Nomenklatur der Verbindungen der allgemeinen Formel I b wird die Nomenklatur analog zu WO 98/42664 verwendet.

Die Verbindungen I a und I b können in einem Verhältnis von 0 : 100 bis 90 :10 mol-% eingesetzt werden. Bevorzugte Ausführungsformen sind 0 100 mol-%, 10 : 90 mol-%, 50 : 50 mol-%, und 90 : 10 mol-%

Zahlreiche Komplexe der allgemeinen Formel I a oder b sind für sich polymerisationsinaktiv. Sie benötigen einen Aktivator, der nach gängiger Vorstellung den Liganden L¹ abstrahiert. Bei dem Aktivator kann es sich um Olefinkomplexe des Rhodiums oder Nickels handeln.

Bevorzugte, kommerziell bei Aldrich erhältliche Nickel-(Olefin)_{y}-Komplexe sind Ni (C₂H₄)₃, Ni(1,5-Cyclooctadien)₂ "Ni(COD)₂", Ni(1,6-Cyclodecadien)₂, oder Ni(1,5,9-*all-trans*-Cyclododecatrie-n)₂. Besonders bevorzugt ist Ni(COD)₂.

Besonders geeignet sind gemischte Ethylen/1,3-Dicarbonylkomplexe des Rhodiums, beispielsweise Rhodium-Acetylacetonat-Ethylen Rh(acac) (CH₂=CH₂)₂, Rhodium-Benzoylacetonat-Ethylen Rh(C₆H₅-CO-CH-CO-CH₃) (CH₂=CH₂)₂ oder Rh(C₆H₅-CO-CH-CO-C₆H₅) (CH₂=CH₂)₂. Am besten geeignet ist Rh(acac) (CH₂=CH₂)₂. Diese Verbindung lässt sich nach der Rezeptur von R. Cramer aus *Inorg. Synth*. **1974**, *15*, 14 synthetisieren.

Einige Komplexe der allgemeinen Formel I a oder b lassen sich durch Ethylen aktivieren. Die Leichtigkeit der Aktivierungsreaktion hängt entscheidend von der Natur des Liganden L¹ ab. So konnte gezeigt werden, dass für den Fall, dass L¹ ein Tetramethylethylendiamin-Ligand ist, kein Aktivator erforderlich ist.

Die Polymerisation der 1-Olefine unter Verwendung der erfindungsgemäßen Metallkomplexe kann in an sich bekannter weise durchgeführt werden.

Dabei ist die Reihenfolge der Zugabe der Reagenzien bei der Polymerisation unkritisch. So kann zunächst gasförmiges Monomer auf das Lösemittel aufgepresst bzw. flüssiges Monomer zudosiert werden, und anschließend wird der Katalysator zugegeben. Man kann aber auch die Katalysatorlösung zunächst mit weiterem Lösemittel verdünnen und anschließend Monomer zugeben.

Die eigentliche Polymerisation läuft üblicherweise bei einem Mindestdruck von 1 bar, unterhalb dieses Druckes ist die Polymerisationsgeschwindigkeit zu gering. Bevorzugt sind 2 bar und besonders bevorzugt ist ein Mindestdruck von 10 bar.

Als maximaler Druck sind 4000 bar zu nennen; bei höheren Drücken sind die Anforderungen an das Material des Polymerisationsreaktors sehr hoch, und der Prozess wird unwirtschaftlich. Bevorzugt sind 100 bar und besonders bevorzugt sind 50 bar.

Die Polymerisationstemperatur lässt sich in einem weiten Bereich variieren. Als Mindesttemperatur sind 10°C zu nennen, da bei tiefen Temperaturen die Polymerisationsgeschwindigkeit zurückgeht. Bevorzugt ist eine Mindesttemperatur von 40°C und besonders bevorzugt sind 65°C. Als maximale sinnvolle Temperatur sind 350°C zu nennen und bevorzugt 150°C, besonders bevorzugt sind 100°C.

Vor der Polymerisation werden die Komplexe in einem organischen Lösemittel oder in Wasser gelöst. Durch mehrminütiges Rühren oder Schütteln wird gewährleistet, dass die Lösung klar ist. Dabei kann - je nach Löslichkeit der betreffenden Struktur - die Rührzeit zwischen 1 und 100 Minuten betragen.

Gleichzeitig wird der Aktivator, sofern er notwendig ist, in einer zweiten Portion desselben Lösemittels oder aber in Aceton gelöst.

Als organische Lösemittel eignen sich aromatische Lösemittel wie Benzol, Toluol, Ethylbenzol, ortho-Xylol, meta-Xylol und para-Xylol sowie Mischungen derselben. Des weiteren eignen sich cyclische Ether wie Tetrahydrofuran und Dioxan oder acyclische Ether wie Diethylether, Di-n-butylether, Di-isopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet sowie Gemische dieser Lösemittel mit Wasser oder Alkoholen wie Methanol oder Ethanol.

Bevorzugt sind Aceton und Wasser sowie Mischungen aus Aceton und Wasser, wobei das Mischungsverhältnis beliebig ist.

Die Menge des Lösemittels ist ebenfalls unkritisch, es muss jedoch gewährleistet sein, dass sich der Komplex und der Aktivator vollständig lösen können, andernfalls ist mit Aktivitätseinbußen zu rechnen. Der Lösungsvorgang kann gegebenenfalls durch Ultraschallbehandlung beschleunigt werden.

Der optional zuzugebende Emulgator kann in einer dritten Portion des Lösemittels oder auch zusammen mit dem Komplex gelöst werden.

Dabei wird die Menge des Emulgators so gewählt, dass das Masseverhältnis zwischen Monomer und Emulgator größer als 1 ist, bevorzugt größer als 10 und besonders bevorzugt größer als 20. Dabei ist es umso günstiger, je weniger Emulgator verwendet werden muss.

Die Komplexe der Formel I a und I b können für sich als Emulgatoren wirken. Die Aktivität in der Polymerisation wird jedoch deutlich gesteigert, wenn ein zusätzlicher Emulgator zugegeben wird. Dieser Emulgator kann nichtionischer oder ionischer Natur sein.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Beispiele hierfür sind die Lutensol®-Marken der BASF AG oder die Triton®-Marken der Union Carbide. Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: c₁₂-c₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyl-*N,N,N*-trimethylammoniumbromid, *N-*Dodecyl-*N,N,N*-trimethylammoniumbromid, *N,N*-Distearyl-N,N-dimethylammoniumchlorid sowie das Gemini-Tensid *N,N*'-(Lauryldimethyl)ethylendiamindibromid. Zahlreiche weitere Beispiele finden sich in H. Stache, Tensid-Taschenbuch, Carl-Hanser-Verlag, München, Wien, **1981** und in McCutcheon's, *Emulsifiers* & *Detergents,* MC Publishing Company, Glen Rock, **1989**.

Anschließend werden die Komponenten - Komplex in Lösung, optional die Lösung des Emulgators und optional die Lösung des Aktivators in den Polymerisationsreaktor gegeben. Als Polymerisationsreaktor haben sich gerührte Kessel und Autoklaven sowie Rohrreaktoren als brauchbar erwiesen, wobei die Rohrreaktoren als Schlaufenreaktor ausgeführt werden können.

Das oder die zu polymerisierenden Monomere werden in dem Polymerisationsmedium gemischt. Dabei können als Polymerisationsmedium Wasser oder Gemische von Wasser mit den oben aufgeführten Lösemitteln verwendet werden. Es ist zu beachten, dass der Anteil an Wasser mindestens 50 Vol.-% beträgt, bezogen auf die Gesamtmischung, bevorzugt mindestens 90 Vol.-% und besonders bevorzugt mindestens 95 Vol.-%.

Die Lösungen des Komplexes, gegebenenfalls des Aktivators und gegebenenfalls des Emulgators werden mit dem Gemisch aus Monomer und wässrigem Polymerisationsmedium vereinigt. Die Reihenfolge der Zugabe der verschiedenen Komponenten ist an sich unkritisch. Es ist jedoch erforderlich, dass die Vereinigung der Komponenten so schnell erfolgt, dass keine Kristallisation von intermediär eventuell auftretenden schwer löslichen Komplexverbindungen erfolgt.

Als Polymerisationsverfahren sind grundsätzlich kontinuierliche und diskontinuierliche Verfahren geeignet. Bevorzugt sind halbkontinuierliche Verfahren (Semi-batch-Verfahren), in denen nach Vermischen aller Komponenten Monomer oder Monomerengemische im Verlauf der Polymerisation nachdosiert werden.

Nach dem erfindungsgemäßen Verfahren werden zunächst wässrige Polymerdispersionen erhalten.

Die mittleren Teilchendurchmesser der Polymerpartikel in den erfindungsgemäßen Dispersionen betragen zwischen 10 und 1000 nm, bevorzugt zwischen 50 und 500 nm und besonders bevorzugt zwischen 70 und 350 nm. Die Verteilung der Teilchendurchmesser kann, muss aber nicht sehr einheitlich sein. Für manche Anwendungen, insbesondere für solche mit hohen Feststoffanteilen (> 55%), sind breite oder bimodale Verteilungen sogar bevorzugt.

Die nach dem erfindungsgemäßen Verfahren erhaltenen Polymere weisen technisch interessante Eigenschaften auf. Im Falle von Polyethylen weisen sie einen hohen Grad der Kristallinität auf, was beispielsweise durch die Anzahl der Verzweigungen nachgewiesen werden kann. Man findet weniger als 40 Verzweigungen, bevorzugt weniger als 20 Verzweigungen pro 1000 C-Atomen des Polymers und besonders bevorzugt weniger als 10 Verzweigungen, bestimmt durch ¹H-NMR und ¹³C-NMR-Spektroskopie.

Die Schmelzenthalpien der nach dem erfindungsgemäßen Verfahren erhältlichen Polyethylene sind größer 100 J/g, bevorzugt größer 140 und besonders bevorzugt größer als 180 J/g, gemessen durch DSC.

Die Molekulargewichtsverteilungen der nach dem erfindungsgemäßen Verfahren erhältlichen Polyethylene sind eng, d.h. die Q-Werte liegen zwischen 1,1 und 3,5 und bevorzugt zwischen 1,5 und 3,1.

Vorteilhaft an den erfindungsgemäßen Dispersionen ist neben dem günstigen Preis aufgrund der billigen Monomeren und Verfahren, dass sie witterungsstabiler als Dispersionen von Polybutadien oder Butadiencopolymeren sind. Gegenüber Dispersionen von Polymeren mit Acrylaten oder Methacrylaten als Hauptmonomer ist die geringere Neigung zum Verseifen als vorteilhaft zu nennen. Weiterhin ist von Vorteil, dass die meisten Olefine leichtflüchtig sind und sich nicht polymerisierte Restmonomere leicht entfernen lassen. Schließlich ist von Vorteil, dass während der Polymerisation keine Molmassenregler wie beispielsweise tert.-Dodecylmercaptan zugegeben werde müssen, die einerseits schlecht abgetrennt werden können, andererseits aber unangenehm riechen.

Aus den zunächst erhaltenen wässrigen Dispersionen lassen sich durch Entfernen des Wassers und gegebenenfalls des oder der organischen Lösemittel die Polymerpartikel als solche erhalten. Zur Entfernung des Wassers und gegebenenfalls des oder der organischen Lösemittel sind zahlreiche gängigen Verfahren geeignet, beispielsweise Filtrieren, Sprühtrocknen oder Verdampfen. Die so erhaltenen Polymere haben eine gute Morphologie und eine hohe Schüttdichte.

Die Teilchengröße lassen sich mit Lichtstreumethoden bestimmen. Einen Überblick findet man in D. Distler (Herausgeber) "Wäßrige Polymerdispersionen", Wiley-VCH Verlag, 1. Auflage, 1999, Kapitel 4.

Die nach dem erfindungsgemäßen Verfahren erhaltenen Dispersionen lassen sich in zahlreichen Anwendungen vorteilhaft verwenden, wie beispielsweise Papieranwendungen wie Papierstreicherei oder Oberflächenleimung, weiterhin Anstrichen und Lacken, Bauchemikalien, Klebrohstoffe, Formschäume, Textil- und Lederapplikationen, Teppichrückenbeschichtungen, Matratzen oder pharmazeutischen Anwendungen.

Unter Papierstreicherei versteht man das Beschichten der Papieroberfläche mit wässrigen pigmentierten Dispersionen. Dabei sind die erfindungsgemäßen Dispersionen aufgrund ihres günstigen Preises vorteilhaft. Unter Oberflächenleimung versteht man das pigmentfreie Auftragen von hydrophobierenden Substanzen. Dabei sind gerade die bisher unter wirtschaftlichen Bedingungen nur schwer zugänglichen Polyolefindispersionen als besonders hydrophobe Substanz von Vorteil. Weiterhin ist von Vorteil, dass während der Herstellung der erfindungsgemäßen Dispersionen für Papierstreicherei oder Oberflächenleimung keine Molmassenregler wie beispielsweise tert.-Dodecylmercaptan zugegeben werde müssen, die einerseits schlecht abgetrennt werden können, andererseits aber unangenehm riechen.

In Anstrichen und Lacken sind die erfindungsgemäßen Dispersionen besonders geeignet, weil sie preislich sehr günstig sind. Besonders vorteilhaft sind wässrige Polyethylendispersionen, weil sie weiterhin auch eine besondere UV-Stabilität aufweisen. Weiterhin sind wässrige Polyethylendispersionen besonders geeignet, weil sie gegenüber basischen Chemikalien, die in der Bauchemie üblich sind, beständig sind.

In Klebstoffen, insbesondere in Klebstoffen für selbstklebende Etiketten oder Folien sowie Pflastern, aber auch in Bauklebstoffen oder Industrieklebstoffen, haben die erfindungsgemäßen Dispersionen wirtschaftliche Vorteile. Insbesondere in Bauklebstoffen sind sie besonders günstig, weil sie gegenüber basischen Chemikalien, die in der Bauchemie üblich sind, beständig sind in Formschäumen, die sich aus den erfindungsgemäßen Dispersionen durch an sich bekannte Verfahren wie das Dunlop-Verfahren oder das Talalay-Verfahren herstellen lassen, ist wiederum der günstige Preis der erfindungsgemäßen Dispersionen vorteilhaft. Als weitere Komponenten dienen Geliermittel, Seifen, Verdicker und Vulkanisationspasten. Formschäume werden beispielsweise zu Matratzen verarbeitet.

Textil- und Lederapplikationen dienen zur Haltbarmachung und Veredlung von Textil oder Leder. Unter den Effekten sind die Imprägnierung sowie die weitere Ausrüstung der Textilien beispielhaft zu nennen. Vorteilhaft an den erfindungsgemäßen Dispersionen als Bestandteil in Textil- und Lederapplikationen ist neben dem günstigen Preis die Geruchsfreiheit, da sich Olefine als Restmonomere leicht entfernen lassen.

Teppichrückenbeschichtungen dienen zum Verkleben der Teppichfasern auf dem Rücken, weiterhin haben sie die Aufgabe, dem Teppich die nötige Steifigkeit zu geben sowie Additive wie beispielsweise Flammschutzmittel oder Antistatika gleichmäßig zu verteilen. Vorteilhaft an den erfindungsgemäßen Dispersionen ist neben dem günstigen Preis die Unempfindlichkeit gegenüber den gängigen Additiven. Insbesondere die erfindungsgemäßen Polyethylendispersionen haben sich als chemisch besonders inert erwiesen. Schließlich ist von Vorteil, dass während der Herstellung der Dispersionen für Teppichrückenbeschichtungen keine Molmassenregler wie beispielsweise tert.-Dodecylmercaptan zugegeben werde müssen, die einerseits schlecht abgetrennt werden können, andererseits aber unangenehm riechen.

Unter pharmazeutischen Zubereitungen werden Dispersionen als Träger von Medikamenten verstanden. Dispersionen als Träger von Medikamenten sind an sich bekannt. Vorteilhaft an den nach dem erfindungsgemäßen Verfahren erhaltenen Dispersionen als Träger von Medikamenten ist der wirtschaftlich günstige Preis und die Beständigkeit gegen Körpereinflüsse wie Magensaft oder Enzyme.

### Arbeitsbeispiele

Allgemeines: Die Synthesen wurden, wenn nicht anders beschrieben, nach der Schlenk-Technik unter Luft- und Feuchtigkeitsausschluss durchgeführt.

Tetrahydrofuran, Toluol, Dichlormethan, Diethylether und Pentan wurden vor ihrer Verwendung absolutiert (Dichlormethan: Calciumhydrid; sonstige: Natrium) und unter Argon destilliert.

Die viskosimetrischen Bestimmungen an den Polymeren wurden nach ISO 1628-3 durchgeführt. Die Molmassenbestimmungen wurden mittels GPC durchgeführt. In Anlehnung an DIN 55672 wurden die folgenden Bedingungen gewählt: Lösemittel 1,2,4-Trichlorbenzol, Fluss: 1 ml/min; Temperatur 140°C. Es wurde an einem Waters 150C-Gerät gemessen, das mit Polyethylen-Standards kalibriert worden war.

### 1. Ligandsynthese [C₁₆H₃₃NMe₃]⁺ LPh₃P-C (H) (SO₃-)C(=O)-4-MeC₆H₄]

### 1.1 Darstellung von Ph₃P=CHC(=O)-4-MeC₆H₄

17,8 g Methyltriphenylphosphoniumbromid (49,8 mmol) wurden unter Argon vorgelegt und in 80 ml Tetrahydrofuran suspendiert. Zu dieser Suspension spritzte man unter Rühren 27,8 ml einer 1,6 M Lösung von Butyllithium in Hexan (entspr. 44,4 mmol Butyllithium). Man beobachtete ein Aufklaren der Suspension und einen Farbumschlag von gelb nach rot. Anschließend rührte man die Lösung 60 Minuten, bis das Edukt vollständig gelöst war, ehe eine Lösung von 3,87 g (25 mmol) p-Toluolsulfonsäurechlorid in 10 ml Tetrahydrofuran zugespritzt wurde. Dabei kam es zu einer Verfärbung nach gelb sowie zum Ausfallen eines weißen Feststoffs. Das Reaktionsgemisch wurde dann 2 Stunden gerührt, ehe man es auf 400 ml Wasser goß und die so erhaltene Suspension fünfmal mit je 150 ml Diethylether extrahierte. Die vereinigten organischen Phasen wurden über Natriumsulfat getrocknet, filtriert und anschließend stark eingeengt. Man lagerte die Lösung über Nacht bei 4 °C und saugte den ausgefallenen hellgelben Feststoff ab (4 g, 10,1 mmol). Die Mutterlauge wurde noch stärker eingeengt und erneut gekühlt. Hieraus erhielt man weitere 1,5 g (3,8 mmol) Produkt, so daß die Gesamtausbeute an Ph₃P=CHC(=O)-4-MeC₆H₄ 5,5 g (13,9 mmol, 56%) betrug.

### 1.2 Darstellung von Ph₃P⁺-C (H) (SO₃⁻) -C (=O)-4-MeC₆H₄

2,1 g (13,2 mmol) Schwefeltrioxid-Pyridin-Addukt wurden unter Argonatmosphäre vorgelegt. Hierzu tropfte man unter Eiskühlung langsam eine Lösung von 5 g (12,7 mmol) Ph₃P=CHC(=O)-4-MeC₆H₄ in 40 ml Methylenchlorid. Es entstand binnen weniger Minuten eine gelbe Lösung, welche über Nacht bei Raumtemperatur gerührt wurde. Anschließend zog man das Lösungsmittel ab, verrührte den erhaltenen farblosen Rückstand in 30 ml Ethanol und wusch nach dem Absaugen zweimal mit je 15 ml Ethanol nach. Nach dem Trocknen im Vakuum erhielt man 4,5 g (9,5 mmol) Ph₃P⁺-C(H) (SO₃-)-C(=O)-4-MeC₆H₄ als farbloses Pulver in 75 %iger Ausbeute.

### 1.3 Darstellung von [C₁₆H₃₃NMe₃]+[Ph₃P=C(SO₃⁻)-C(=O)-4-MeC₆H₄]

3,87 g (8,17 mmol) Ph₃P⁺-C(H) (SO₃-)-C(=O)-4-MeC₆H₄ wurden in 50 ml Methanol/ Wasser 2:1 Gemisch suspendiert und unter Verwendung von 1 Tropfen 1 %iger ethanolischer Phenolphthaleinlösung als Indikator mit Hexadecyltrimethylammoniumhydroxid-Lösung (10 Gew.-% in Wasser) titriert. Der pH-Wert wurde zusätzlich mit pH-Fix-Indikatorpapier überprüft. Gegen Ende der Titration erwärmte man auf 50 °C und titrierte weiter, bis schließlich eine klare Lösung (pH = 7,5) resultierte. Das Lösungsmittel wurde anschließend abgezogen und Wasserspuren über azeotrope Destillation mit Ethanol entfernt. Man erhielt auf diesem Weg nach Trocknen im Ölpumpenvakuum 5,16 g (6,81 mmol) [C₁₆H₃₃NMe₃]⁺ [Ph₃P=C (SO₃⁻)-C(=O)-4-MeC₆H₄] als farblosen hygroskopischen Feststoff in 83 %iger Ausbeute.

Den analogen Liganden Na⁺[Ph₃P=C(SO₃⁻)-C(=O)-4-MeC₆H₄] erhielt man durch Einsatz von wässriger Natronlauge zur Neutralisation.

### 2. Komplexsynthese

### [C₁₆H₃₃NMe₃]⁺[Ni (Ph) PPh₃ (κ²P, OPh₂PC (SO₃⁻) =C (-O) (p-MeC₆H₄)]

Die Synthese erfolgte unter Argonatmosphäre unter Anwendung von Standard-Schlenktechnik. 709 mg (2,58 mmol) Ni(COD)₂ wurden in 25 ml Tetrahydrofuran bei - 30 °C suspendiert, hierzu gab man unter Rühren 1 Äquivalent (676 mg) Triphenylphosphan und beobachtete dabei das um Auftreten einer roten Färbung. Zu dem erhaltenen Reaktionsgemisch spritzte man (mit einer Transferkanüle) unter Rühren eine Lösung von 1 Äquivalent (1,954 g) des Liganden [C₁₆H₃₃NMe₃]⁺[Ph₃P=C(SO₃⁻) -C(=O)-4-MeC₆H₄] in 25 ml THF, die man zuvor auf 50°C erwärmte, um den Liganden vollständig in Lösung zu bringen. Man ließ den Ansatz auf Raumtemperatur erwärmen, erhitzte ihn anschließend kurzzeitig auf 50°C und rührte dann die dunkle Lösung bei Raumtemperatur über Nacht. Schließlich entfernte man das Lösungsmittel im Vakuum, nahm den Rückstand in 50 ml Toluol auf, filtrierte und engte das Filtrat im Vakuum auf ca. 1/5 seines Volumens ein. Man vermengte die toluolische Phase mit 70 ml Pentan und filtrierte den gebildeten Niederschlag ab. Anschließend wusch man mehrmals mit Pentan nach, trocknete im Vakuum und erhielt 2,453 g (2,27 mmol) des Komplexes [C₁₆H₃₃NMe₃]⁺ [Ni (Ph) PPh₃(κ2*P*,*O*Ph₂ *P*C(SO₃⁻)=C (-*O*) (p-MeC₆H₄)] in 88 % Ausbeute als gelben Feststoff.

### Den analogen Natriumkomplex

Na⁺[Ni(Ph) PPh₃(κ²*P*,*O*Ph₂*P*C(SO₃⁻)=C(-*O*) (p-MeC₆H₄)] erhielt man durch Einsatz des Ylid-Liganden Na⁺[Ph₃P=C(SO₃⁻) -C(=O)-4-MeC₆H₄], hierbei konnte auf ein Erwärmen des Reaktionsgemischs verzichtet werden.

Charakteristische NMR-Daten:
[C₁₆H₃₃NMe₃]⁺ [Ph₃P=C(SO₃⁻) C(=O)-4-MeC₆H₄]
³¹P-NMR (CDCl₃, 200 MHz, extern 85 %ige H₃PO₄) δ 16,8 (s)
Na⁺ [Ph₃P=C(SO₃⁻)C(=O)-4-MeC₆H₄]
³¹P-NMR (CDCl₃, 200 MHz, extern 85 %ige H₃PO₄) δ 16,7 (s)
[C₁₆H₃₃NMe₃]⁺ [Ni (Ph) PPh₃(κ²*P*, *O*Ph₂*P*C(SO₃⁻)=C(-*O*) (p-MeC₆H₄)]
³¹P-NMR (C₆D₆, 200 MHz, extern 85 %ige H₃PO₄) δ 38,3 (d, 2J(P,P) = 136,4 Hz), δ 21,0 (d, 2J(P,P) = 136,4 Hz)
Na⁺ [Ni (Ph)PPh₃(κ²*P*, *O*Ph₂*P*C(SO₃⁻)=C(-*O*) (p-MeC₆H₄)]
³¹P-NMR (C₆D₆, 200 MHz, extern 85 %ige H₃PO₄) δ 35,4 (d, 2J(P,P) = 138, 7 Hz), δ 21,0 (d, 2J(P,P) = 138,8 Hz)

### 3. Polymerisationsbeispiele

### 3.1 Allgemeines

Die Polymerisationsversuche wurden in einem Stahlautoklaven (Büchi-Miniclave) durchgeführt, die Temperaturregelung erfolgte extern über ein Poly(ethylenglycol)-Heizbad, die Rührgeschwindigkeit (Propellerrührer) betrug 1000 U/min, das Gesamtvolumen an flüssigen Phasen betrug jeweils 100 ml. Bei den Transferoperationen wurde ein Teil des Lösemittelvolumens zum Nachspülen verwandt, die Lösungen/Suspensionen wurden unter Argon hergestellt. Bei Polymerisationen in Gegenwart von Wasser wurde dieses zuvor durch mehrstündige Durchleiten von Argon entgast; gleiches gilt für die verwendeten organischen Lösemittel, sofern sie nicht getrocknet (s.o.) eingesetzt wurden.

### 3.1.1 Polymerisation mit Na⁺ (nicht erfindungsgemäß)

### [Ni (Ph) PPh₃(Ph₂PCH (SO₃⁻)C(=O) (p-MeC₆H₄)]

Man löste den Komplex (ggf. zusammen mit dem Emulgator, z.B. Triton® X-100 (1g), Natriumdodecylsulfat (500 mg), Hexadecyltrimethylammoniumtetrafluoroborat (357 mg)) in 95 ml Wasser (bei Versuchen mit 50 ml Aceton gab man 30 ml Aceton zu der wässrigen Komplexlösung) oder 50 ml organischem Lösemittel und rührte 20 min (um einen intensiven Komplex-Wasser-Kontakt vor der Polymerisation zu gewährleisten). Getrennt davon löste man ½ Äquivalent Acetylacetonato-bis (ethylen)-rhodium-(I) in 5 bzw. 50 ml des jeweiligen organischen Lösemittels (bei versuchen mit 50 ml Aceton in 20 ml Aceton). Beide Lösungen wurden anschließend nacheinander (1. Aktivator, 2. Komplex) im Ethylengegenstrom in den mit Ethylen gespülten Autoklaven transferiert. Dann spülte man mehrmals mit Ethylengas, ehe man unter Rühren den gewünschten Ethylendruck aufpresste und den Reaktor temperierte.

Nach erfolgter Reaktion wurde der Autoklav mit einem Eisbad gekühlt, dann der Überdruck abgelassen.

### 3.1.2 Polymerisation mit [C₁₆H₃₃NMe₃]⁺ (nicht erfindungsgemäß)

### [Ni (Ph) PPh₃ (Ph₂PCH (SO₃⁻) C(=O) (p-MeC₆H₄)]

Die Lösungen wurden unter Argon hergestellt. Man löste den Katalysator in der Hälfte des Volumens an organischem Lösungsmittel, spritzte zu dieser Lösung gegebenenfalls die entsprechende Menge Wasser und rührte dann 20 min (um einen intensiven Komplex-Wasser-Kontakt vor der Polymerisation zu gewährleisten). Getrennt davon löste man in der anderen Hälfte ½ Äquivalent Acetylacetonato-bis(ethylen)-rhodium-(I). Beide Lösungen wurden anschließend nacheinander (1. Aktivator, 2. Komplex) im Ethylen-Gegenstrom in den mit Ethylen gespülten Autoklaven transferiert und anschlie-Bend gegebenenfalls das Restvolumen Wasser zugespritzt. Dann spülte man mehrmals mit Ethylengas, ehe man unter Rühren den gewünschten Ethylendruck aufpresste und den Reaktor temperierte.

Die Polymerisationen wurden stets bei einem Druck von 50 bar durchgeführt, die Reaktionsdauer betrug 2 Stunden.

Nach erfolgter Reaktion wurde der Autoklav mit einem Eisbad gekühlt, dann der Überdruck abgelassen.

Die Ergebnisse sind Tabelle 1 zu entnehmen.

### 3.2 Aufarbeitung

### 3.2.1 Aufarbeitung von Ansätzen ohne Emulgatorzusatz

Fester Bestandteile wurden abgesaugt und mit Methanol oder Aceton nachgewaschen, ehe man sie im Vakuumtrockenschrank bei 50 °C trocknete. Exemplarisch wurde in einigen versuchen das Filtrat eingeengt, um es auf gelöste Produkte zu untersuchen.

### 3.2.2 Aufarbeitung von Ansätzen mit Emulgatorzusatz

Die erhaltene Emulsion wurde erforderlichenfalls zunächst über ein Papierfilter oder Glaswolle abgesaugt, dann über Glaswolle filtriert. Man bestimmte die Partikeldurchmesser mit einem Zetasizer der Fa. Malvern. Die Emulsion wurde dann in 200 ml Aceton gegossen und nach halbstündigem Rühren der ausgefallene Feststoff abgesaugt. Der so erhaltene Feststoff wurde mit Methanol oder Aceton gewaschen, ehe man ihn im Vakuumtrockenschrank bei 50 °C trocknete.

### 4. Copolymerisationsbeispiele: Copolymerisation von Ethylen mit Norbornen

### 4.1. Polymerisation in Wasser-Toluol-Systemen

### 4.1.1. Verwendung des Komplexes (nicht erfindungsgemäß)

### [C₁₆H₃₃N(CH₃)₃]⁺ [Ni(Ph) (PPh₃) (κ²P, OPh₂PC (SO₃⁻)=C(-O) (p-MeC₆H₄)] (I a.2)

Es wurden Lösungen von 10,9 mg (4,2 µmol) Acetylacetonato-bis(ethylen)-rhodium-(I) sowie von 91,0 mg (84,3 µmol) [C₁₆H₃₃N(CH₃)₃]⁺ (Ni(Ph) (PPh₃) (κ2*P*, *O*Ph₂*PC*(SO₃⁻)=C(-*O*) (p-MeC₆H₄)] in jeweils 5 ml Toluol getrennt voneinander hergestellt. Anschließend wurden 85 ml Wasser sowie die beiden Lösungen nacheinander im Ethylengegenstrom in einen mit Ethylen gespülten 250-ml-Stahlautoklaven mit mechanischem Rührwerk transferiert. Dazu wurden 4,0 g (4,2 mmol) Norbornen, gelöst in 5 ml Toluol, gegeben. Es wurde mehrmals mit Ethylen gespült, dann unter Rühren (Propellerrührer, 1000 U/min) ein Ethylendruck von 40 bar aufgepresst.

Nach dreistündigem Rühren bei Raumtemperatur wurde der Überdruck abgelassen, der gebildete Feststoff durch Dekantieren isoliert und bei 50°C im Vakuum getrocknet (1 g). Das erhaltene Polymer ist ein klebriges amorphes Material. Bei Vermengung der Flüssigphasen mit Methanol konnte keine Präzipitation weiterer polymerer Produkte beobachtet werden.

### 4.1.2. Verwendung des Komplexes

### [Ni(Ph) (PPh₃) (κ²N, O(2-O-(3,5-I₂)-C₆H₂)-C(H)=N-2,6-(i-Pr)₂-C₆H₃] (I b.1)

Beispiel 8: Eine Lösung von 5,0 g (53,1 mmol) Norbornen in 5 ml Toluol und eine Lösung von 500 mg (0,8 mmol) Triton X-100 in 90 ml Wasser wurden im Ethylengegenstrom in einem mit Ethylen gespülten 250-m1-Stahlautoklaven mit mechanischem Rührwerk vereint. Davon getrennt wurde eine Lösungen von 5,8 mg (22,6 µmol) Acetylacetonato-bis(ethylen)-rhodium-(I) zusammen mit 42,0 mg (45,1 µmol)
[Ni (Ph) (PPh₃) (κ²*N*, *O*(2*-O-* (3,5-I₂) -C₆H₂) -C (H) =*N*-2,6- (i-Pr)₂-C₆H₃] in 5 ml Toluol hergestellt und umgehend ebenfalls in den Autoklaven transferiert. Es wurde mehrmals mit Ethylen gespült, dann unter Rühren (Propellerrührer, 1000 U/min) ein Ethylendruck von 40 bar aufgepresst.

Nach dreistündigem Rühren bei Raumtemperatur wurde der Überdruck abgelassen. Neben abgeschiedenem Feststoff (1,1 g; elastisch und transparent) wurde eine Dispersion erhalten. Diese wurde über Glaswolle filtriert und die Partikelgröße durch statische Lichtstreuung zu 170 nm bestimmt. Durch Fällung mit Methanol ließ sich aus der Dispersion 1,1 g Copolymer erhalten. Mittels ¹³C-NMR (1,1,2,2-Tetrachlorethan-*d*₂, 122 °C) wurde sein Norbornen-Gehalt zu 14 mol-% bestimmt.

Beispiel 9: Eine Lösung von 700 mg (7,4 mmol) Norbornen in 1 ml Toluol und eine Lösung von 1 g (1,6 mmol) Triton X-100 in 95 ml Wasser wurden im Ethylengegenstrom in einem mit Ethylen gespülten 250-ml Stahlautoklaven mit mechanischem Rührwerk vereint. Davon getrennt wurde eine Lösungen von 8,7 mg (33,9 µmol) Acetylacetonato-bis(ethylen)-rhodium-(I) zusammen mit 63,0 mg (67,7 µmol) [Ni (Ph) (PPh₃) (κ²*N*, *O(*2*-O-*(3,5-I₂) -C₆H₂) -C(H) *=N-2,*6- (i-Pr)₂-C₆H₃] in 4 ml Toluol hergestellt und umgehend ebenfalls in den Autoklaven transferiert. Es wurde mehrmals mit Ethylen gespült, dann unter Rühren (Propellerrührer, 1000 U/min) ein Ethylendruck von 50 bar aufgepresst.

Nach zweistündigem Rühren bei Raumtemperatur wurde der Überdruck abgelassen. Aus der erhaltenen Polymerdispersion schied nach Filtration über Glaswolle ein Feststoff ab. Der Ansatz wurde in 200 ml Methanol gegeben, das Copolymer durch Filtration isoliert und bei 50°C im Vakuum getrocknet (1,3 g). Aus dem ¹³C-NMR (1,1,2,2-Tetrachlorethan-d₂, 122 C) wurde der Norbornen-Gehalt zu 10 mol-% bestimmt.

### 4.2. Vergleichsversuche: Polymerisationen in reinem Toluol als Vergleichsversuche

### Verwendung des Komplexes (nicht erfindungsgemäß)

### [C₁₆H₃₃N(CH₃)₃]⁺[Ni(Ph) (PPh₃) (κ²P, OPh₂PC(SO₃⁻) =C (-O) (p-MeC₆H₄)] (I. a.2)

Vergleichsbeispiel V10: Es wurden Lösungen von 7,2 mg (27,9 µmol) Acetylacetonato-bis(ethylen)-rhodium-(I) sowie von 60,0 mg (55,6 µmol) [C₁₆H₃₃N(CH₃)₃]⁺
[Ni(Ph) (PPh₃) (κ2*P*,*O*Ph₂*P*C(SO₃⁻)=C(-O) (p-MeC₆H₄)] in jeweils 45 ml Toluol getrennt voneinander hergestellt. Anschließend wurden beide Lösungen im Ethylengegenstrom nacheinander in einen mit Ethylen gespülten 250-ml-Stahlautoklaven mit mechanischem Rührwerk transferiert. Dazu wurden 7,7 g (81,8 mmol) Norbornen, gelöst in 10 ml Toluol, gegeben. Es wurde mehrmals mit Ethylen gespült, dann unter Rühren (Propellerrührer, 1000 U/min) ein Ethylendruck von 10 bar aufgepresst.

Nach dreistündigem Rühren bei Raumtemperatur wurde der Überdruck abgelassen. Die erhaltene klare Lösung wurde in 200 ml Methanol gegeben, das ausgefallene Copolymer durch Dekantieren isoliert und bei 50°C im Vakuum getrocknet (1,5 g). Das erhaltene Polymer ist transparent. WAXS-Untersuchungen ergeben einen Kristallinitätsgrad < 2 %.

### Verwendung des Komplexes

### [Ni(Ph) (PPh₃) (κ²N, O(2-O-(3,5-I₂)-C₆H₂)-C(H) =N-2,6-(i-Pr)₂-C₆H₃] (I b.1)

Vergleichsbeispiel V11: Es wurden Lösungen von 11,2 mg (43,4 µmol) Acetylacetonato-bis(ethylen)-rhodium-(I) sowie von 81,0 mg (87,1 µmol)
[Ni (Ph) (PPh₃) (κ²*N*, *O*(2-*O*-(3,5-I₂)-C₆H₂) -C(H) =*N*-2*,*6-(i-Pr)₂-C₆H₃] in jeweils 45 ml Toluol getrennt voneinander hergestellt. Anschließend wurden beide Lösungen im Ethylengegenstrom nacheinander in einen mit Ethylen gespülten 250-ml-Stahlautoklaven mit mechanischem Rührwerk transferiert. Hierzu wurden 10,0 g (106,2 mmol) Norbornen, gelöst in 10 ml Toluol, gegeben. Es wurde mehrmals mit Ethylen gespült, dann unter Rühren (Propellerrührer, 1000 U/min) ein Ethylendruck von 10 bar aufgepresst.

Nach dreistündigem Rühren bei Raumtemperatur wurde der Überdruck abgelassen. Die erhaltene klare Lösung wurde in 200 ml Methanol gegeben, das ausgefallene Copolymer durch Filtration isoliert und bei 50 C im Vakuum getrocknet (6 g). Das erhaltene Polymer ist transparent und elastisch. WAXS-Untersuchungen ergeben einen Kristallinitätsgrad < 2 %.

### 5. Verwendung eines Gemischs von

### Na⁺[Ni(Ph) PPh₃ (Ph₂PCH(SO₃⁻)C(=O) (p-MeC₆H₄)] (I. a.1) und (Ni(Ph) (PPh₃) (κ²N, O(2-O-(3,5-I₂) -C₆H₂) -C (H) =N-2, 6- (i-Pr)₂-C₆H₃] (I b.1) für die Ethylenpolymerisation in Wasser (Beispiel 12)

1 g Natriumdodecylsulfat wurden unter Argon in 95 ml deionisiertem Wasser (durch mehrstündiges Durchleiten von Argon entgast) gelöst und die Lösung im Ethylengegenstrom in einen mehrfach mit Ethylen gespülten 250 ml Stahlautoklaven mit mechanischem Rührwerk transferiert. Anschließend wurde unter Argon eine Lösung von 44,0 mg (54 µmol) Na⁺
[Ni (Ph) PPh₃ (Ph₂PCH (SO₃⁻) C (=O) (p-MeC₆H₄)], 60, 0 mg (64 µmol)
(Ni(Ph) (PPh₃) (κ²*N*,O(2-*O*-(3,5-I₂) -C₆H₂) -C(H)=*N*-2,6- (i-Pr)₂-C₆H₃] sowie 15,3 mg (59 µmol) Acetylacetonato-bis(ethylen)-rhodium-(I) in 5 ml Aceton (durch mehrstündige Durchleiten von Argon entgast) hergestellt und umgehend ebenfalls in den Autoklaven transferiert. Es wurde mehrmals mit Ethylengas gespült, unter Rühren (1000 U/min) ein Ethylendruck von 45 bar aufgepresst und der Reaktor auf 50 °C temperiert.

Nach 2 Stunden wurde der Autoklav auf Raumtemperatur abgekühlt, dann wurde die Polymerisation durch Entspannen abgebrochen. Das gebildete Polyethylen wurde durch Filtration isoliert, mehrmals mit Wasser sowie Methanol gewaschen und bei 50 °C im Vakuumtrockenschrank getrocknet (3,2 g).

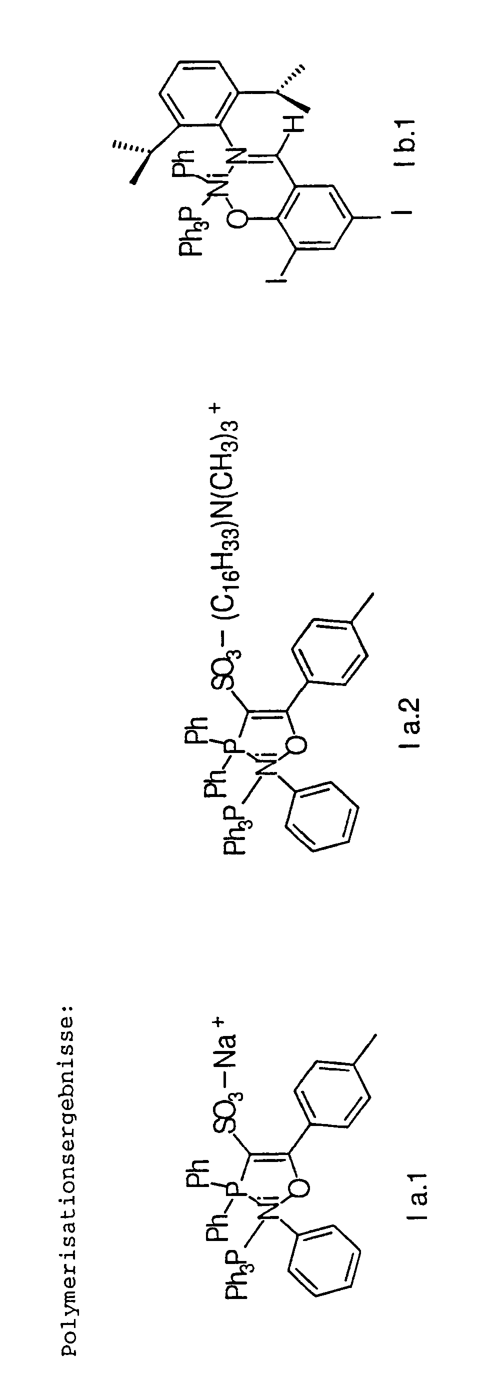

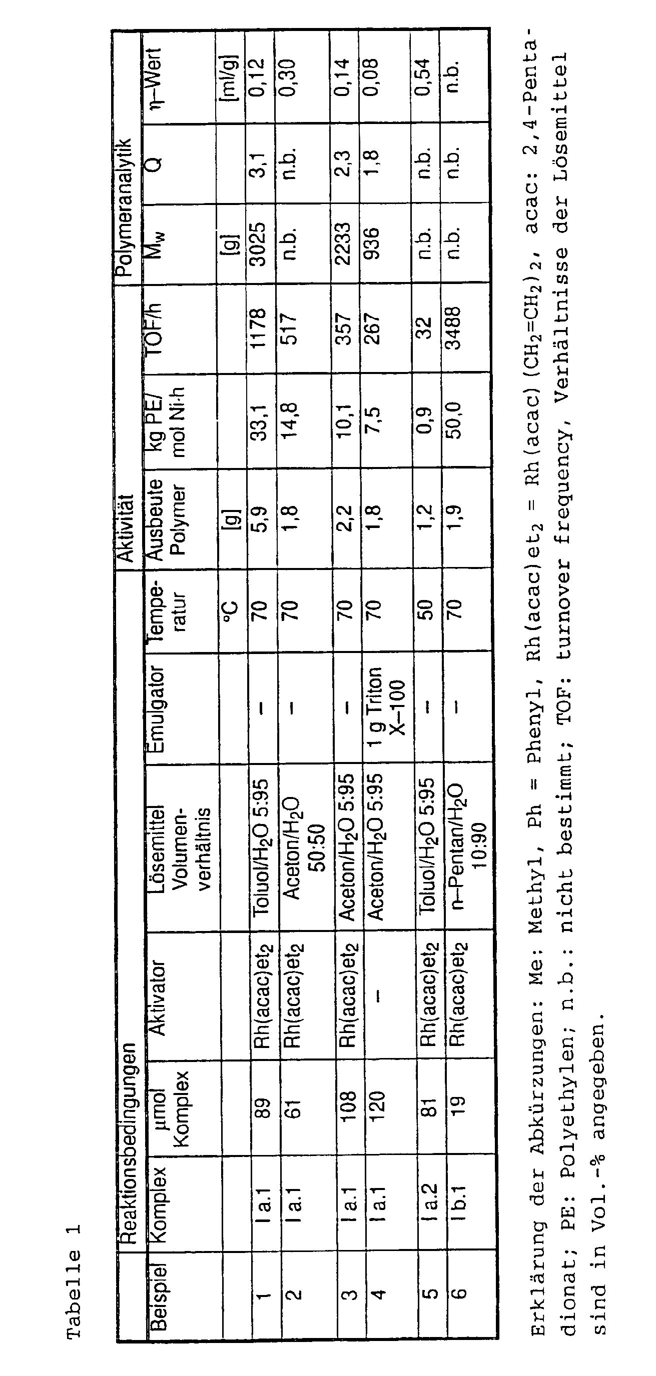

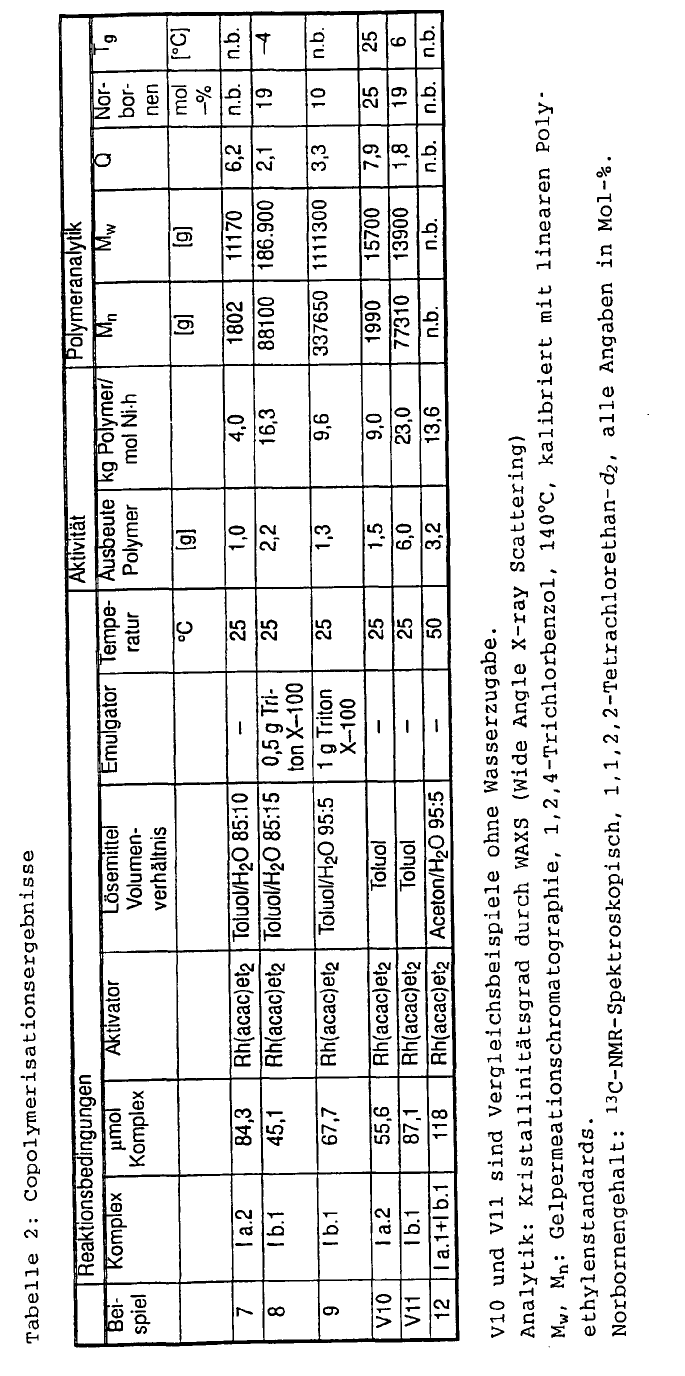

## Patentansprüche

1. verfahren zur Emulsionspolymerisation von einem oder mehreren Olefinen durch Umsetzung der Olefine mit einer Komplexverbindung der allgemeinen Formel I b oder einem Gemisch der Komplexverbindungen I a und I b, in einem Verhältnis von 0:100 bis 90:10 mol-% 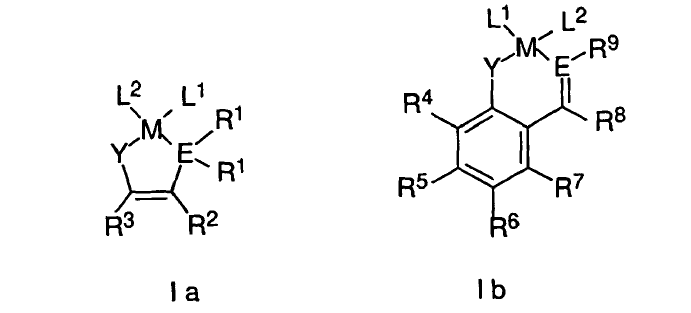 wobei die Reste wie folgt definiert sind:
M ein Übergangsmetall der Gruppen 7 bis 10 des Periodensystems der Elemente;
L¹ Phosphane (R¹⁶)ₓPH₃₋ₓ oder Amine (R¹⁶)ₓNH₃₋ₓ mit gleichen oder verschiedenen Resten R¹⁶, Ether (R¹⁶)₂O, H₂O, Alkoholen (R¹⁶)OH, Pyridin, Pyridinderivate der Formel C₅H₅₋ₓ(R¹⁶)ₓN, CO, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
L² Halogenidionen, Amidionen RₕNH₂₋ₕ, wobei x eine ganze Zahl von 0 bis 2 bedeutet, und weiterhin C₁-C₆-Alkylanionen, Allylanionen, Benzylanionen oder Arylanionen, wobei L¹ und L² miteinander durch eine oder mehrere kovalente Bindungen verknüpft sein können,
E Stickstoff, Phosphor, Arsen oder Antimon,
X -SO₃⁻, -O-PO₃²⁻, NH(R¹⁵)₂⁺, N(R¹⁵)₃⁺ oder - (OCH₂CH₂)ₙOH und
n eine ganze Zahl von 0 bis 15,
Y Sauerstoff, Schwefel, N-R¹⁰ oder P-R¹⁰,
R¹ Wasserstoff, C₁-C₁₂-Alkylgruppen, C₇-C₁₃-Aralkylresten und C₆-C₁₄-Arylgruppen, unsubstituiert oder substituiert mit einer hydrophilen Gruppe X,
R² und R³ Wasserstoff,
hydrophile Gruppen X,
C₁-C₁₂-Alkyl, wobei die Alkylgruppen verzweigt oder unverzweigt sein können,
C₁-C₁₂-Alkyl, ein- oder mehrfach gleich oder verschieden substituiert durch C₁-C₁₂-Alkylgruppen, Halogene, hydrophile Gruppen X, C₁-C₁₂-Alkoxygruppen oder C₁-C₁₂-Thioethergruppen,
C₇-C₁₃-Aralkyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, hydrophile Gruppen X, C₁-C₁₂-Alkoxygruppen oder
C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, hydrophile Gruppen X, ein- oder mehrfach halogenierte C₁-C₁₂-Alkylgruppen, C₁-C₁₂-Alkoxygruppen, Silyloxygruppen OSiR¹⁰R¹¹R¹², Aminogruppen NR¹³R¹⁴ oder C₁-C₁₂-Thioethergruppen,
C₁-C₁₂-Alkoxygruppen,
Silyloxygruppen OSiR¹⁰R¹¹R¹²,
Halogene
oder Aminogruppen NR¹³R¹⁴,
wobei die Reste R² und R³ miteinander einen gesättigten oder ungesättigten 5- bis 8-gliedrigen Ring bilden können,
und wobei
mindestens ein Rest R¹, R² oder R³ eine hydrophile Gruppe X trägt;
R⁴ bis R⁷ Wasserstoff,
hydrophile Gruppen X,
C₁-C₁₂-Alkyl, wobei die Alkylgruppen verzweigt oder unverzweigt sein können,
C₁-C₁₂-Alkyl, ein- oder mehrfach gleich oder verschieden substituiert durch C₁-C₁₂-Alkylgruppen, Halogene, hydrophile Gruppen X, C₁-C₁₂-Alkoxygruppen oder C₁-C₁₂-Thioethergruppen,
C₇-C₁₃-Aralkyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, hydrophile Gruppen X, C₁-C₁₂-Alkoxygruppen oder
C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, hydrophile Gruppen X, ein- oder mehrfach halogenierte
C₁-C₁₂-Alkylgruppen, C₁-C₁₂-Alkoxygruppen, Silyloxygruppen OSiR¹⁰R¹¹R¹², Aminogruppen NR¹³R¹⁴ oder C₁-C₁₂-Thioethergruppen,
C₁-C₁₂-Alkoxygruppen,
Silyloxygruppen OSiR¹⁰R¹¹R¹²,
Halogene,
NO₂-Gruppen
oder Aminogruppen NR¹³R¹⁴,
wobei jeweils zwei benachbarte Reste R⁴ bis R⁷ miteinander einen gesättigten oder ungesättigten 5-8-gliedrigen Ring bilden können,
R⁸ und R⁹ Wasserstoff, C₁-C₆-Alkylgruppen, C₇-C₁₃-Aralkylresten und C₆-C₁₄-Arylgruppen, unsubstituiert oder substituiert mit einer hydrophilen Gruppe X,
R¹⁰ bis R¹⁵ unabhängig voneinander ausgewählt werden aus Wasserstoff, C₁-C₂₀-Alkylgruppen, die ihrerseits mit O(C₁-C₆-Alkyl) oder N(C₁-C₆-Alkyl)₂-Gruppen substituiert sein können, C₃-C₁₂-Cycloalkylgruppen, C₇-C₁₃-Aralkylresten und C₆-C₁₄-Arylgruppen;
R¹⁶ Wasserstoff, C₁-C₂₀-Alkylgruppen, die ihrerseits mit O(C₁-C₆-Alkyl) oder N(C₁-C₆-Alkyl)₂-Gruppen substituiert sein können,
C₃-C₁₂-Cycloalkylgruppen, C₇-C₁₃-Aralkylresten und C₆-C₁₄-Arylgruppen, unsubstituiert oder substituiert mit einer hydrophilen Gruppe X,
in Wasser oder in einem Lösemittelgemisch, das mindestens 50 Vol.-% Wasser enthält, optional in Gegenwart eines Aktivators und eines Emulgators.

2. Verfahren zur Emulsionspolymerisation gemäß Anspruch 1 mit Komplexverbindungen der allgemeinen Formel I b, in denen mindestens ein Rest R⁴ bis R⁹ eine hydrophile Gruppe X trägt.

3. Verfahren zur Emulsionspolymerisation gemäß Anspruch 1 und 2 durch Umsetzung des Olefins mit mindestens einer elektrisch neutralen Nickel-Komplexverbindung der allgemeinen Formel I a oder I b.

4. Verfahren zur Emulsionspolymerisation gemäß den Ansprüchen 1 bis 3, wobei es sich bei dem Aktivator um Olefinkomplexe des Rhodiums oder Nickels handelt.

5. Verfahren zur Emulsionspolymerisation gemäß den Ansprüchen 1 bis 4 in Anwesenheit eines Emulgators.

6. Verfahren zur Emulsionspolymerisation gemäß den Ansprüchen 1 bis 5, wobei eines der Olefine Ethylen ist.

7. Verfahren zur Emulsionspolymerisation gemäß den Ansprüchen 1 bis 5, wobei das eine Olefin Ethylen ist und das Comonomer ausgewählt wird aus Propylen, 1-Buten, 1-Hexen oder Styrol.

8. Verfahren zur Emulsionscopolymerisation gemäß den Ansprüchen 1 bis 5, wobei das eine Olefin Ethylen ist und das Comonomer ausgewählt wird aus Norbornen, Norbornadien oder cis- oder trans-2-Buten.

## Claims

1. A process for emulsion polymerizing one or more olefins by reacting the olefins with a complex compound of the formula Ib or with a mixture of the complex compounds Ia and Ib in a ratio of 0:100 to 90:10 mol% 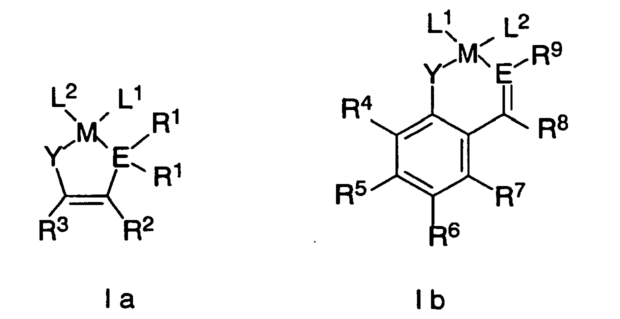 where:
M is a transition metal from groups 7 to 10 of the Periodic Table of the Elements;
L¹ is phosphines (R¹⁶)ₓPH₃₋ₓ or amines (R¹⁶)ₓNH₃₋ₓ with identical or different radicals R¹⁶, ethers (R¹⁶)₂O, H₂O, alcohols (R¹⁶)OH, pyridine, pyridine derivatives of the formula C₅H₅₋ₓ(R¹⁶)ₓN, CO, C₁-C₁₂ alkylnitriles, C₆-C₁₄ arylnitriles or ethylenically unsaturated double bond systems, x being an integer from 0 to 3,
L² is halide ions, amide ions RₕNH₂₋ₕ, h being an integer from 0 to 2, and also C₁-C₆ alkyl anions, allyl anions, benzyl anions or aryl anions, it being possible for L¹ and L² to be linked to one another by one or more covalent bonds,
E is nitrogen, phosphorus, arsenic or antimony,
X is -SO₃⁻, -O-PO₃²⁻, NH(R¹⁵)₂⁺, N(R¹⁵)₃⁺ or -(OCH₂CH₂)ₙOH, and
n is an integer from 0 to 15,
Y is oxygen, sulfur, N-R¹⁰ or P-R¹⁰,
R¹ is hydrogen, C₁-C₁₂ alkyl groups, C₇-C₁₃ aralkyl radicals and C₆-C₁₄ aryl groups, unsubstituted or substituted by a hydrophilic group X,
R² and R³ are hydrogen,
hydrophilic groups X,
C₁-C₁₂ alkyl, it being possible for the alkyl groups to be branched or unbranched,
C₁-C₁₂ alkyl substituted one or more times by identical or different substituents comprising C₁-C₁₂ alkyl groups, halogens, hydrophilic groups X, C₁-C₁₂ alkoxy groups or C₁-C₁₂ thioether groups,
C₇-C₁₃ aralkyl,
C₃-C₁₂ cycloalkyl,
C₃-C₁₂ cycloalkyl substituted one or more times by identical or different substituents comprising C₁-C₁₂ alkyl groups, halogens, hydrophilic groups X, C₁-C₁₂ alkoxy groups or C₁-C₁₂ thioether groups,
C₆-C₁₄ aryl,
C₆-C₁₄ aryl substituted one or more times by identical or different substituents comprising C₁-C₁₂ alkyl groups, halogens, hydrophilic groups X, monohalogenated or polyhalogenated C₁-C₁₂ alkyl groups, C₁-C₁₂ alkoxy groups, silyloxy groups OSiR¹⁰R¹¹R¹², amino groups NR¹³R¹⁴ or C₁-C₁₂ thioether groups,
C₁-C₁₂ alkoxy groups,
silyloxy groups OSiR¹⁰R¹¹R¹²,
halogens
or amino groups NR¹³R¹⁴,
it being possible for the radicals R² and R³ together to form a saturated or unsaturated 5- to 8-membered ring, and
at least one radical R¹, R² or R³ carrying a hydrophilic group X;
R⁴ to R⁷ are hydrogen,
hydrophilic groups X,
C₁-C₁₂ alkyl, it being possible for the alkyl groups to be branched or unbranched,
C₁-C₁₂ alkyl, substituted one or more times by identical or different substituents comprising C₁-C₁₂ alkyl groups, halogens, hydrophilic groups X, C₁-C₁₂ alkoxy groups or C₁-C₁₂ thioether groups,
C₇-C₁₃ aralkyl,
C₃-C₁₂ cycloalkyl,
C₃-C₁₂ cycloalkyl substituted one or more times by identical or different substituents comprising C₁-C₁₂ alkyl groups, halogens, hydrophilic groups X, C₁-C₁₂ alkoxy groups or C₁-C₁₂ thioether groups,
C₆-C₁₄ aryl,
C₆-C₁₄ aryl substituted one or more times by identical or different substituents comprising C₁-C₁₂ alkyl groups, halogens, hydrophilic groups X, monohalogenated or polyhalogenated C₁-C₁₂ alkyl groups, C₁-C₁₂ alkoxy groups, silyloxy groups OSiR¹⁰R¹¹R¹², amino groups NR¹³R¹⁴ or C₁-C₁₂ thioether groups,
C₁-C₁₂ alkoxy groups,
silyloxy groups OSiR¹⁰R¹¹R¹²,
halogens,
NO₂ groups
or amino groups NR¹³R¹⁴,
it being possible for pairs of adjacent radicals R⁴ to R⁷ together to form a saturated or unsaturated 5-8-membered ring,
R⁸ and R⁹ are hydrogen, C₁-C₆ alkyl groups, C₇-C₁₃ aralkyl radicals and C₆-C₁₄ aryl groups, unsubstituted or substituted by a hydrophilic group X,
R¹⁰ to R¹⁵ are selected independently of one another from hydrogen, C₁-C₂₀ alkyl groups, which may be substituted in turn by O(C₁-C₆ alkyl) or N(C₁-C₆ alkyl)₂ groups, or are C₃-C₁₂ cycloalkyl groups, C₇-C₁₃ aralkyl radicals and C₆-C₁₄ aryl groups;
_{R}¹⁶ is hydrogen, C₁-C₂₀ alkyl groups, which may in turn be substituted by O(C₁-C₆ alkyl) or N(C₁-C₆ alkyl)₂ groups, or is C₃-C₁₂ cycloalkyl groups, C₇-C₁₃ aralkyl radicals and C₆-C₁₄ aryl groups unsubstituted or substituted by a hydrophilic group X,
in water or in a solvent mixture comprising at least 50% by volume of water, optionally in the presence of an activator and an emulsifier.

2. The process according to claim 1 with complex compounds of the formula Ib in which at least one radical R⁴ to R⁹ carries a hydrophilic group X.

3. The process according to claim 1 or 2 by reacting the olefin with at least one electrically neutral nickel complex compound of the formula Ia or Ib.

4. The process according to any of claims 1 to 3, wherein the activator comprises olefin complexes of rhodium or of nickel.

5. The process according to any of claims 1 to 4 in the presence of an emulsifier.

6. The process according to any of claims 1 to 5, wherein one of the olefins is ethylene.

7. The process according to any of claims 1 to 5, wherein one olefin is ethylene and the comonomer is selected from propylene, 1-butene, 1-hexene and styrene.

8. The process according to any of claims 1 to 5, wherein one olefin is ethylene and the comonomer is selected from norbornene, norbornadiene and cis- and trans-2-butene.

## Revendications

1. Procédé de polymérisation en émulsion d'une ou de plusieurs oléfines par réaction des oléfines avec un composé complexe de la formule générale I b ou un mélange des composés complexes I a et I b, dans un rapport de 0/100 à 90/10 en % molaires, 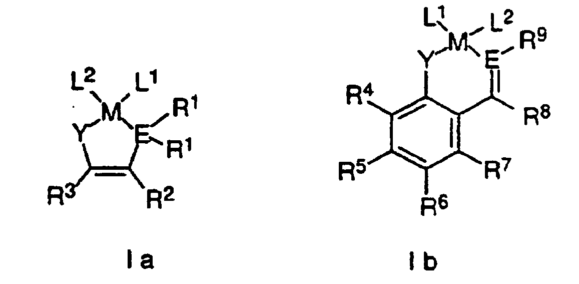 où les radicaux sont définis de la manière suivante :
M représente un métal de transition des groupes 7 à 10 du système périodique des éléments,
L¹ représente des phosphanes (R¹⁶)ₓPH₃₋ₓ ou amines (R¹⁶)ₓNH₃₋ₓ présentant des radicaux R¹⁶ identiques ou différents, des éthers (R¹⁶)₂O, H₂O, des alcools (R¹⁶)OH, de la pyridine, des dérivés de pyridine de la formule C₅H₅₋ₓ(R¹⁶)ₓN, CO, des nitriles alkyliques en C₁-C₁₂, des nitriles aryliques en C₆-C₁₄ ou des systèmes à double liaison éthyléniquement insaturés, où x représente un nombre entier de 0 à 3,
L² représente des ions halogénure, des ions amide RₕNH₂₋ₕ, où h représente un nombre entier de 0 à 2, ainsi que des anions alkyle en C₁-C₆, des anions allyle, des anions benzyle ou des anions aryle, L¹ et L²pouvant être reliés l'un à l'autre par une ou plusieurs liaisons covalentes,
E représente de l'azote, du phosphore, de l'arsenic ou de l'antimoine,
X représente -SO₃⁻, -O-PO₃²⁻, NH(R¹⁵)₂⁺, N(R¹⁵)₃⁺ ou -(OCH₂CH₂)ₙOH, et
n est un nombre entier de 0 à 15,
Y représente de l'oxygène, du soufre, N-R¹⁰ ou P-R¹⁰,
R¹ représente de l'hydrogène, des groupes alkyle en C₁-C₁₂, des radicaux aralkyle en C₇-C₁₃ et des groupes aryle en C₆-C₁₄, non substitués ou substitués par un groupe hydrophile X,
R² et R³ représentent de l'hydrogène,
des groupes hydrophiles X,
un groupe alkyle en C₁-C₁₂, les groupes alkyle pouvant être ramifiés ou non ramifiés,
un groupe alkyle en C₁-C₁₂, substitué à une ou à plusieurs reprises de manière identique ou différente par des groupes alkyle en C₁-C₁₂, des halogènes, des groupes hydrophiles X, des groupes alcoxy en C₁-C₁₂ ou des groupes thioéther en C₁-C₁₂,
un groupe aralkyle en C₇-C₁₃,
un groupe cycloalkyle en C₃-C₁₂,
un groupe cycloalkyle en C₃-C₁₂, substitué à une ou à plusieurs reprises de manière identique ou différente par des groupes alkyle en C₁-C₁₂, des halogènes, des groupes hydrophiles X, des groupes alcoxy en C₁-C₁₂ ou des groupes thioéther en C₁-C₁₂,
un groupe aryle en C₆-C₁₄,
un groupe aryle en C₆-C₁₄, substitué de manière identique ou différente par un ou plusieurs groupes alkyle en C₁-C₁₂, des halogènes, des groupes hydrophiles X, des groupes alkyle en C₁-C₁₂ halogénés à une ou à plusieurs reprises, des groupes alcoxy en C₁-C₁₂, des groupes silyloxy OSiR¹⁰R¹¹R¹², des groupes amino NR¹³R¹⁴ ou des groupes thioéther en C₁-C₁₂,
des groupes alcoxy en C₁-C₁₂,
des groupes silyloxy OSiR¹⁰R¹¹R¹²,
des halogènes,
ou des groupes amino NR¹³R¹⁴
les radicaux R² et R³ pouvant former l'un avec l'autre un cycle pentagonal à octogonal saturé ou insaturé, et
au moins un radical R¹, R² ou R³ portant un groupe hydrophile X,
R⁴ à R⁷ représentent de l'hydrogène,
des groupes hydrophiles X,
un groupe alkyle en C₁-C₁₂, les groupes alkyle pouvant être ramifiés ou non ramifiés,
un groupe alkyle en C₁-C₁₂, substitué à une ou à plusieurs reprises de manière identique ou différente par des groupes alkyle en C₁-C₁₂, des halogènes, des groupes hydrophiles X, des groupes alcoxy en C₁-C₁₂ ou des groupes thioéther en C₁-C₁₂,
un groupe aralkyle en C₇-C₁₃,
un groupe cycloalkyle en C₃-C₁₂,
un groupe cycloalkyle en C₃-C₁₂, substitué à une
ou à plusieurs reprises de manière identique ou différente par des groupes alkyle en C₁-C₁₂, des halogènes, des groupes hydrophiles X, des groupes alcoxy en C₁-C₁₂ ou des groupes thioéther en C₁-C₁₂,
un groupe aryle en C₆-C₁₄,
un groupe aryle en C₆-C₁₄, substitué de manière identique ou différente par un ou plusieurs groupes alkyle en C₁-C₁₂, des halogènes, des groupes hydrophiles X, des groupes alkyle en C₁-C₁₂ halogénés à une ou à plusieurs reprises, des groupes alcoxy en C₁-C₁₂, des groupes silyloxy OSiR¹⁰R¹¹R¹², des groupes amino NR¹³R¹⁴ ou
des groupes thioéther en C₁-C₁₂,
des groupes alcoxy en C₁-C₁₂,
des groupes silyloxy OSiR¹⁰R¹¹R¹²,
des halogènes,
des groupes NO₂,
ou des groupes amino NR¹³R¹⁴,
deux radicaux voisins R⁴ à R⁷ pouvant respectivement former l'un avec l'autre un cycle pentagonal à octogonal saturé ou insaturé,
R⁸ et R⁹ représentent de l'hydrogène, des groupes alkyle en C₁-C₆, des radicaux aralkyle en C₇-C₁₃ et des groupes aryle en C₆-C₁₄, non substitués ou substitués par un groupe hydrophile X,
R¹⁰ à R¹⁵ sont choisis indépendamment l'un de l'autre parmi de l'hydrogène, des groupes alkyle en C₁-C₂₀, qui, à leur tour, peuvent être substitués par des groupes O(C₁-C₆-alkyle) ou N(C₁-C₆-alkyle)₂, des groupes cycloalkyle en C₃-C₁₂, des radicaux aralkyle en C₇-C₁₃ et des groupes aryle en C₆-C₁₄,
R¹⁶ représente de l'hydrogène, des groupes alkyle en C₁-C₂₀, qui, à leur tour, peuvent être substitués par des groupes O(C₁-C₆-alkyle) ou N(C₁-C₆-alkyle)₂,
des groupes cycloalkyle en C₃-C₁₂, des radicaux aralkyle en C₇-C₁₃ et des groupes aryle en C₆-C₁₄, non substitués ou substitués par un groupe hydrophile X,
dans de l'eau ou dans un mélange de solvants qui contient au moins 50 % en volume d'eau, éventuellement en présence d'un activateur et d'un agent émulsionnant.

2. Procédé de polymérisation en émulsion suivant la revendication 1 avec des composés complexes de la formule générale I b, dans lesquels au moins un radical R⁴ à R⁹ porte un groupe hydrophile X.

3. Procédé de polymérisation en émulsion suivant la revendication 1 ou 2, par réaction de l'oléfine avec au moins un composé complexe de nickel électriquement neutre, répondant à la formule générale I a ou I b.

4. Procédé de polymérisation en émulsion suivant les revendications 1 à 3, dans lequel, en ce qui concerne l'activateur, il s'agit de complexes oléfiniques du rhodium ou du nickel.

5. Procédé de polymérisation en émulsion suivant les revendications 1 à 4, en présence d'un agent émulsionnant.

6. Procédé de polymérisation en émulsion suivant les revendications 1 à 5, dans lequel une des oléfines est l'éthylène.

7. Procédé de polymérisation en émulsion suivant les revendications 1 à 5, dans lequel une oléfine est l'éthylène et le comonomère est choisi parmi du propylène, du 1-butène, du 1-hexène ou du styrène.

8. Procédé de copolymérisation en émulsion suivant les revendications 1 à 5, dans lequel une oléfine est l'éthylène et le comonomère est choisi parmi du norbornène, du norbornadiène ou du cis-2-butène ou du trans-2-butène.
